# EUROPÄISCHE PATENTSCHRIFT

(11) **EP 3 126 685 B1**
(45) Veröffentlichungstag und Bekanntmachung des Hinweises auf die Patenterteilung: **17.02.2021**
(21) Anmeldenummer: 15773973.1
(22) Anmeldetag: 31.03.2015
(51) Int. Cl.: F16B 37/04

(54) **VERBINDER, VERBINDUNGSVERFAHREN SOWIE HERSTELLUNGSVERFAHREN DAFÜR**
CONNECTOR, CONNECTING METHOD AND A PRODUCTION METHOD FOR SAME
DISPOSITIF D'ASSEMBLAGE, PROCÉDÉ D'ASSEMBLAGE ET PROCÉDÉ DE FABRICATION AFFÉRENT

(30) Priorität: 31.03.2014 DE 102014206071
(43) Veröffentlichungstag der Anmeldung: 08.02.2017
(73) Patentinhaber: Böllhoff Verbindungstechnik GmbH, 33649 Bielefeld (DE)
(72) Erfinder: FIGGE, Hans-Ulrich, 33758 Schloß Holte-Stukenbrock (DE); METTEN, Andreas, 33839 Borgholzhausen (DE)
(74) Vertreter: HWP Intellectual Property
(86) Internationale Anmeldenummer: PCT/EP2015/057104
(87) Internationale Veröffentlichungsnummer: WO 2015/150419

(56) Entgegenhaltungen:
- WO-A1-2005/047712
- DE-A1-102004 058 938
- GB-A- 597 104
- JP-A- H10 220 448
- US-A1- 2002 071 737
- US-A1- 2009 282 655

## Beschreibung

### 1. Gebiet der Erfindung

Die vorliegende Erfindung betrifft einen Verbinder für mindestens zwei Bauteile mit einem Abstand dazwischen, wobei der Verbinder ein Randverbinder für ein Bauteil mit einer randnahen Bauteilöffnung ist. Des Weiteren betrifft vorliegende Erfindung ein Verbindungsverfahren eines ersten und eines zweiten Bauteils mit einem Abstand dazwischen mithilfe des genannten Verbinders. Zudem betrifft vorliegende Erfindung ein Herstellungsverfahren für diesen Verbinder.

### 2. Hintergrund der Erfindung

Im Stand der Technik ist die Problematik bekannt, zwei Bauteile mit einem dazwischen liegenden Abstand miteinander zu verbinden. Dies stellt gerade dann ein Problem dar, wenn das erste Bauteil zwar eine nahe dem Rand des Bauteils angeordnete Bauteilöffnung aufweist, am Bauteil selbst oder an der Innenseite der Bauteilöffnung aber kein Befestigungsgewinde oder dergleichen vorhanden ist. In diesem Fall ist es erforderlich, mithilfe eines geeigneten Verbinders, im Speziellen ein Randverbinder, zunächst eine Befestigungsmöglichkeit, wie beispielsweise ein Gewindeelement, nahe der Bauteilöffnung bereitzustellen. Des Weiteren muss ein Verbinder in dieser Bauteilöffnung befestigt werden, sodass das erste Bauteil mit einem weiteren Bauteil verbunden werden kann.

Zu diesem Zweck werden klammerähnliche Verbinder seitlich auf den Rand eines Bauteils aufgesteckt. Derartige Verbinder sind zum Beispiel in DE 10 2004 058 938 A1, US 4,676,706 und DE 103 58 379 A1 beschrieben. Diese auf den Rand des Bauteils aufschiebbaren klammerähnlichen Verbinder weisen jeweils ein geeignetes Befestigungselement auf, welches durch den Verbinder an der Bauteilöffnung positioniert wird. Dieses Befestigungselement ist beispielsweise eine Sechskantmutter mit einem Innengewinde, die entweder integral mit dem Verbinder verbunden ist oder in diesem gehalten wird. Aufgrund ihrer klammerähnlichen Struktur weisen die bekannten Verbinder zwei einander gegenüberliegend angeordnete Schenkel auf. Zwischen diesen Schenkeln wird der Rand des Bauteils aufgenommen. Daher ist es erforderlich, dass der Abstand der sich gegenüberliegenden Schenkel an die Dicke des ersten Bauteils anpassbar ist. Da die beiden einander gegenüberliegenden Schenkel der Verbinder aus US 4,676,706 und DE 103 58 379 A1 jedoch über ein starres Wandstück miteinander verbunden sind, bieten diese Verbinder keinen Anpassungsspielraum im Abstand der beiden einander gegenüberliegend angeordneten Schenkel, wenn die Bauteildicke den vordefinierten Abstand der beiden Schenkel im Verbinder übersteigt oder unterschreitet.

DE 103 54 062 A1 und DE 20 2008 016 230 U1 beschreiben jeweils einen Verbinder, bei dem die einander gegenüberliegend angeordneten Schenkel mithilfe eines Filmscharniers verbunden sind. Dieses Filmscharnier zeichnet sich durch eine gewisse Flexibilität aus, sodass hier Bauteile mit unterschiedlicher Dicke zwischen den beiden Schenkeln aufnehmbar sind. Da jedoch die beiden Schenkel über das Filmscharnier und über die gesamte Breite der Schenkel permanent verbunden sind, führt beispielsweise ein Bauteil großer Dicke zu einem starken Aufspreizen der miteinander verbundenen Schenkel. Durch dieses Aufspreizen ist beispielsweise das Befestigungselement im unteren Schenkel des Verbinders nicht mehr koaxial zur Bauteilöffnung und zur Öffnung im oberen Schenkel des Verbinders angeordnet. Dies hat den Nachteil, dass eine in den Verbinder eingesetzte Befestigungsschraube sich nicht mehr im Gewinde des unteren Schenkels befestigen lässt. Zudem kann es zu Ausrichtungsfehlern zwischen den beiden Bauteilen kommen, falls auch der obere Schenkel durch die Spreizung aufgrund der Dicke des ersten Bauteils nicht mehr eben auf dem ersten Bauteil aufliegt.

DE 103 54 062 A1 und DE 20 2008 016 230 U1 beschreiben ebenfalls die Kombination eines derartigen Randverbinders mit einem Toleranzausgleichselement. Zu diesem Zweck ist der obere Schenkel des Verbinders mit einem Gewindeelement ausgestattet, in dem ein Verstellelement geführt ist. Da das Gewinde des Gewindeelements eine Gangrichtung entgegengesetzt zur Gangrichtung des Innengewindes des Befestigungselements am unteren Schenkel aufweist, wird beim Einschrauben einer Befestigungsschraube ein Verstellelement bis zur Anlage am zweiten Bauteil versetzt. Erst dann findet ein Festdrehen der Befestigungsschraube innerhalb des Verbinders statt.

DE 10 2009 035 874 A1 beschreibt ebenfalls einen klammerähnlichen Randverbinder, der auf den Rand eines Bauteils mit einer Bauteilöffnung aufsteckbar ist. Im unteren Bereich des klammerähnlichen Verbinders ist ein Befestigungselement mit einem Innengewinde eingeformt, welches mithilfe des Verbinders am Ausgang der Bauteilöffnung des Bauteils positionierbar ist. Um an unterschiedlicher Bauteildicken anpassbar zu sein, ist der Randverbinder L-förmig ausgebildet. Am kürzeren L-Schenkel ist das Befestigungselement über flexible Stege gehalten. Zwar sind diese Stege auslenkbar, sodass Bauteile mit unterschiedlicher Dicke im Randverbinder aufnehmbar sind, jedoch nimmt die Halterung des Befestigungselements mittels der flexiblen Stege einen großen Bauraum am Rand des Bauteils ein. Des Weiteren wird das Befestigungselement durch die flexiblen Stege entlang einer Kreisbahn ausgelenkt, wenn sich der Randverbinder an eine bestimmte Bauteildicke anpasst. Dies führt zu Ausrichtungsfehlern zwischen dem Befestigungselement und einer in den Verbinder einzuschraubenden Befestigungsschraube.

Es ist daher die Aufgabe vorliegender Erfindung, einen Verbinder in Form eines Randverbinders für ein Bauteil mit einer nahe seinem Rand angeordneten Bauteilöffnung bereitzustellen, der flexibel an unterschiedliche Bauteildicken anpassbar ist, ohne dabei innere Ausrichtungsfehler zu erzeugen.

### 3. Zusammenfassung der Erfindung

Die obige Aufgabe wird durch einen Verbinder gemäß dem unabhängigen Patentanspruch 1, ein Verbindungsverfahren für ein erstes und ein zweites Bauteil mit einem Abstand dazwischen mithilfe des Verbinders gemäß dem unabhängigen Patentanspruch 12 sowie durch ein Herstellungsverfahren für diesen Verbinder gemäß dem unabhängigen Patentanspruch 14 gelöst. Vorteilhafte Ausgestaltungen und Weiterentwicklungen vorliegender Erfindung gehen aus der folgenden Beschreibung, den begleitenden Zeichnungen sowie den anhängenden Ansprüchen hervor.

Der erfindungsgemäße Verbinder für mindestens ein erstes und ein zweites Bauteil mit einem Abstand dazwischen ist ein zumindest zweiteiliger Randverbinder, der auf den Rand von Bauteilen unterschiedlicher Dicke aufsteckbar ist. Der Verbinder weist die folgenden Merkmale auf: einen ersten vorzugsweise flächigen Schenkel mit einer ersten Öffnung als ein erstes Teil und einen zweiten vorzugsweise flächigen Schenkel mit einer zweiten Öffnung als ein zweites Teil, die über eine einseitige formschlüssige Verbindung bewegbar miteinander verbunden sind, sodass ein Abstand zwischen dem ersten und dem zweiten Schenkel in einem vorgegebenen Intervall einstellbar ist und ein Bauteil mit einer Bauteilöffnung zwischen dem ersten und dem zweiten Schenkel aufnehmbar und der Verbinder über eine Befestigungsschraube in der Bauteilöffnung befestigbar ist.

Der erste und der zweite flächige Schenkel des Verbinders sind einander gegenüberliegend angeordnet. Die flächige Ausbildung der Schenkel dient dazu, dass sich die flächigen Schenkel an eine Bauteiloberfläche anlegen. Dies gewährleistet eine ausreichende Abstützung des Verbinders durch die Bauteiloberfläche. Da der vorliegende Verbinder als Randverbinder für Bauteile unterschiedlicher Bauteildicke eingesetzt wird, müssen die beiden Schenkel in ihrem Abstand zueinander variabel einstellbar sein. Diese Einstellmöglichkeit stellt die einseitig an dem ersten und dem zweiten Schenkel vorgesehene formschlüssige Verbindung zur Verfügung. Diese formschlüssige Verbindung gewährleistet einerseits eine Variation des Abstands der beiden Schenkel zueinander, wobei eine Orientierung der beiden Schenkel zueinander im Wesentlichen beibehalten wird. Des Weiteren gestattet die formschlüssige Verbindung zwischen den beiden Schenkeln ein winkliges Öffnen der miteinander verbundenen Schenkel, sodass ein Bauteil auf einfache Weise zwischen den einander gegenüberliegend angeordneten Schenkeln positionierbar ist.

Gemäß einer Ausführungsform ist der Abstand zwischen den beiden Schenkeln des Verbinders stufenlos einstellbar, also frei in einem durch mindestens ein Langloch definierten Abstandsintervall der Schenkel. Eine weitere Ausführungsform sieht vor, dass der Abstand zwischen den beiden Schenkeln in Stufen einstellbar ist. Konstruktiv ist zu der ersten Ausführungsform ein führendes Langloch mit einer glatten Innenwand ausgestattet. Im Hinblick auf die zweite Ausführungsform weist das mindestens eine Langloch eine abgestufte, ein Raster definierende Innenwand auf. Innerhalb dieses Rasters wird die Drehachse des einen Schenkels stufenweise versetzbar gehalten, während das entsprechende Langloch an dem anderen Schenkel angeordnet ist.

Gemäß vorliegender Erfindung sind der erste und der zweite Schenkel über eine Schwenkachse und um die Schwenkachse verschwenkbar miteinander verbunden, wobei die Schwenkachse senkrecht zu ihrer Verlaufsrichtung versetzbar angeordnet ist. Vorzugsweise ist die Schwenkachse in mindestens einem Langloch, vorzugsweise zwei gegenüberliegend positionierten Langlöchern, angeordnet, die eine Längserstreckung außerhalb einer Fläche des ersten und des zweiten Schenkels aufweisen. Das mindestens eine Langloch ist derart konstruiert, dass es die Drehachsachse frei oder stufenweise versetzbar führt, wie oben bereits erläutert worden ist.

Die formschlüssige Verbindung zwischen dem ersten Schenkel und dem zweiten Schenkel des erfindungsgemäßen Verbinders wird vorzugsweise durch eine in Langlöchern geführte Schwenkachse realisiert. Die Schwenkachse besteht aus jeder möglichen Konstruktion, die eine Drehung bzw. ein Verschwenken der Schenkel um diese Schwenkachse ermöglichen. So ist es beispielsweise bevorzugt, den ersten Schenkel mit einer durchgehenden Schwenkachse, einer durchbrochenen Schwenkachse, zwei die Schwenkachse bildende Stifte oder durch einen ähnlich passend geformten Steg auszubilden, der in seinem Querschnitt rund und somit das Verschwenken der Schenkel unterstützend ausgeformt ist. Des Weiteren ist vorzugsweise die Schwenkachse, egal welcher Konstruktion, in einander gegenüberliegend angeordneten Langlöchern aufgenommen. Diese Langlöcher gewährleisten einen Versatz der Schwenkachse in Richtung der Längserstreckung der Langlöcher. Somit definiert die Verlaufsrichtung der Längserstreckung der Langlöcher, in welcher Richtung die Schenkel im Bezug zueinander ihren Abstand verändern können.

Gemäß einer bevorzugten Ausführungsform ist die Verlaufsrichtung der Langlöcher senkrecht zur jeweiligen Fläche der Schenkel angeordnet. Daher führt ein Versatz der Schwenkachse innerhalb der Langlöcher vorzugsweise zu einer Vergrößerung oder Verkleinerung des Abstands zwischen den beiden einander gegenüberliegend angeordneten Schenkeln des Verbinders. Zudem gewährleistet die formschlüssige Verbindung zwischen dem ersten und dem zweiten Schenkel, dass diese um die gleiche Drehachse verschwenkbar angeordnet sind. Basierend auf diesem Verschwenken können die beiden Schenkel um einen bestimmten Winkel geöffnet bzw. beabstandet voneinander angeordnet werden, sodass der Rand eines Bauteils einfach zwischen den beiden Schenkeln einführbar ist. Während sich die Flächen der Schenkel jeweils an die Bauteiloberfläche anlegen, wird die Drehachse innerhalb der Langlöcher senkrecht zu ihrer Verlaufsrichtung versetzt, bis die Schenkel voneinander um die Dicke des dazwischen eingesetzten Bauteils beabstandet sind.

Gemäß einer weiteren bevorzugten Ausführungsform des erfindungsgemäßen Verbinders weist dessen zweiter Schenkel ein Befestigungsgewinde angrenzend an die zweite Öffnung auf, wobei dieses Befestigungsgewinde vorzugsweise durch eine in einem Käfig gehaltene Mutter oder durch ein im zweiten Schenkel eingeformtes Gewinde gebildet wird. Der erfindungsgemäße Verbinder dient als Randverbinder, wie oben bereits erläutert worden ist. Im Bereich einer Bauteilöffnung nahe dem Rand des Bauteils wird der Randverbinder auf das Bauteil aufgesteckt. Dieser Aufsteckvorgang hat zum Ziel, dass die jeweilige Öffnung in den Schenkeln des Verbinders koaxial mit der Bauteilöffnung ausgerichtet ist. Da der zweite Schenkel des Verbinders mit dem Befestigungsgewinde ausgestattet ist, lässt sich eine Befestigungsschraube mithilfe des Befestigungsgewindes in der Bauteilöffnung befestigen. Diese Befestigung dient beispielsweise dazu, dass ein zweites Bauteil mindestens beabstandet um die Dicke des ersten Schenkels des Verbinders mit dem ersten Bauteil und dessen Bauteilöffnung verbunden wird. Diese Verbindung ist beispielsweise durch eine in dem zweiten Bauteil vorgesehene Bauteilöffnung realisierbar. Das Befestigungsgewinde im zweiten Schenkel ist auf unterschiedliche konstruktive Weise realisierbar. Gemäß einer bevorzugten Ausführungsform bildet der Schenkel einen Käfig, in dem eine Mutter oder ein ähnliches Gewindeelement drehfest gehalten wird. Es ist ebenfalls bevorzugt, am zweiten Schenkel des Verbinders ein integral ausgebildetes Befestigungsgewinde vorzusehen. Wird der zweite Schenkels des Verbinders beispielsweise aus Kunststoff hergestellt, lässt sich dieses Befestigungsgewinde in einer vorgeformten Verdickung des zweiten Schenkels realisieren. Gemäß einer weiteren bevorzugten Ausführungsform wird das Gewinde in den zweiten Schenkel eingeformt. Einformen umfasst in diesem Zusammenhang, dass ein Gewinde in den zweiten Schenkel eingeschnitten, ein Gewindeeinsatz in dem zweiten Schenkel während eines Spritzgussverfahrens oder allgemein eines Gussverfahrens befestigt wird oder indem eine Mutter oder ein Gewindeeinsatz in den zweiten Schenkel warmeingepresst wird oder indem eine Mutter in den zweiten Schenkel eingegossen wird.

Gemäß einer weiteren bevorzugten Ausführungsform des erfindungsgemäßen Verbinders wird das Befestigungsgewinde durch eine in einem Käfig gehaltene Mutter gebildet. Gemäß einer bevorzugten Ausgestaltung ist die Mutter innerhalb des Käfigs seitlich bewegbar, um Fehlausrichtungen zwischen Befestigungsschraube und Mutter ausgleichen zu können. Gleichzeitig wird die Mutter bevorzugt drehfest im Käfig gehalten. Gemäß einer bevorzugten Ausgestaltung weist die Mutter eine Längsstreckung auf, sodass sie im befestigten Zustand des zweiten Schenkels die Bauteilöffnung des ersten Bauteils durchläuft, um an dem ersten Schenkel abstützbar zu sein.

In Abhängigkeit davon, mit welchen Klemmkräften der Verbinder und im Speziellen der zweite Schenkel am ersten Bauteil befestigt werden muss, sind unterschiedliche Konstruktionen des ersten Schenkels bevorzugt. Gerade bei hohen Klemmkräften sollte eine übermäßige mechanische Belastung des aus Kunststoff bestehenden zweiten Schenkels vermieden werden, da der Kunststoff unter der Wirkung der Klemmkräfte versucht, die mechanische Belastung aufzubauen. Dies führt zu einer Schwächung der Verbindung zwischen dem zweiten Schenkel und dem ersten Bauteil, was für die Lebensdauer der Verbindung unerwünscht ist.

Daher weist gemäß einer bevorzugten Ausführungsform die Mutter eine gewisse Länge parallel zu ihrer Gewindeöffnung auf. Aufgrund dieser Längserstreckung der Mutter und der in Richtung erstem Bauteil offenen Gestaltung des zweiten Schenkels kann die Mutter im befestigten Zustand des zweiten Schenkels die Bauteilöffnung durchgreifen und am ersten Schenkel anliegend befestigt werden. Indem aufgrund der Längsgestaltung der Mutter diese vorzugsweise direkt an einem Verstärkungselement des ersten Schenkels anliegt, werden die die Befestigung des Verbinders beeinträchtigenden zwischengeschalteten Kunststoffschichten vermieden. Dies verbessert die Befestigung des zweiten Schenkels am ersten Bauteil, wodurch die Anwendungsbreite des Verbinders erhöht wird.

Vorzugsweise ist der zweite Schenkel über die Mutter gegen das erste Bauteil in einem Presssitz verspannbar. Weiterhin erfindungsgemäß bevorzugt weist der erste Schenkel eine Verstärkung auf, vorzugsweise eine Metallscheibe, die zumindest teilweise in die Bauteilöffnung des ersten Bauteils ragt, sodass die Verstärkung durch die Mutter, vorzugsweise direkt, angreifbar ist.

Zur weiteren Stabilisierung des Verbinders und im Speziellen des ersten Schenkels weist der erste Schenkel ein Verstärkungselement auf. Dieses Verstärkungselement wird durch eine Scheibe gebildet, die zentral von der Befestigungsschraube durchgriffen wird. Aufgrund der symmetrischen Öffnung der Scheibe stellt sie einen gleichmäßigen umlaufenden Rand zur Verfügung, an dem sich beispielsweise die oben diskutierte Mutter abstützen kann. Während Kunststoffmaterialien unterschiedlicher Härte für diese Scheibe geeignet sind, ist es ebenfalls bevorzugt, diese Scheibe durch Materialien hoher Festigkeit, wie beispielsweise Metall, Keramik und dergleichen, vorzusehen. Derart stabile Materialien unterstützen nicht nur die mechanische Beständigkeit des Verbinders, sondern widerstehen gleichzeitig der Wirkung chemisch aggressiver Medien.

Während sich die längliche Mutter direkt an der Verstärkung des ersten Schenkels abstützt, wird vorzugsweise der zweite Schenkel durch einen klemmenden Presssitz zwischen der Mutter und dem ersten Bauteil befestigt. Zu diesem Zweck greift die Mutter an mindestens einem Befestigungsteg innerhalb des bevorzugten Käfigs des zweiten Schenkels an, um über diesen Befestigungssteg, vorzugsweise federnd, den zweiten Schenkel gegen das erste Bauteil zu drücken. Diese bevorzugte indirekte Befestigung des zweiten Schenkels am ersten Bauteil verringert die mechanische Belastung des Materials des zweiten Schenkels und somit sein Relaxationsverhalten. Auf diese Weise wird die Lebensdauer des zweiten Schenkels und somit des Verbinders erhöht und gleichzeitig die Gefahr einer Beschädigung des zweiten Schenkels während des Befestigungvorgangs reduziert.

Gemäß einer weiteren bevorzugten Ausführungsform des erfindungsgemäßen Verbinders weist der erste Schenkel des Verbinders ein Toleranzausgleichselement zum Ausgleich von Toleranzen zwischen dem ersten und zweiten Bauteil auf. Vorzugsweise umfasst dazu der erste Schenkel ein Gewindeelement, in dessen Innengewinde ein Verstellelement geführt ist, wobei eine erste Gangrichtung des Innengewindes einer zweiten Gangrichtung des Befestigungsgewindes des zweiten Schenkels entgegengesetzt ist. Zudem weist bevorzugt das Verstellelement einen inneren Mitschlepper auf, über den eine Reibschlussverbindung mit einer Befestigungsschraube herstellbar ist. Sobald die Befestigungsschraube in das Verstellelement eingedreht wird, folgt der Mitschlepper aufgrund dieser Reibschlussverbindung der Drehung der Befestigungsschraube. Da die erste Gangrichtung des Innengewindes des Verstellelements der Gangrichtung des Gewindes der Befestigungsschraube entgegengesetzt ist, erzeugt die Drehung der Befestigungsschraube ein Herausschrauben des Verstellelements aus dem Gewindeelement des ersten Schenkels. Dieses Verstellelement wird so weit herausgedreht, bis es an dem zweiten Bauteil anliegt und auf diese Weise eine vorhandene Abstandstoleranz zwischen dem ersten und zweiten Bauteil ausgleicht.

Gemäß einer weiteren bevorzugten Ausführungsform des erfindungsgemäßen Verbinders ist mindestens ein Federarm am Verbinder vorgesehen, mit dem der erste und zweite Schenkel des Verbinders relativ zueinander vorspannbar sind. Der mindestens eine Federarm erzeugt eine Federvorspannung, die die beiden einander gegenüberliegend angeordneten Schenkel gegeneinander drückt oder zumindest in Richtung aufeinander zu vorspannt. Diese Federvorspannung führt dazu, dass nach Einsetzen bzw. während des Einsetzens eines Bauteils zwischen dem ersten flächigen Schenkel und dem zweiten flächigen Schenkel die flächigen Schenkel gegen die Bauteiloberfläche gedrückt werden. Auf diese Weise werden die beiden flächigen Schenkel des Verbinders optimal angrenzend an der Bauteiloberfläche angeordnet. Da davon auszugehen ist, dass die einander gegenüberliegenden Bauteiloberflächen eines Bauteils beispielsweise im Randbereich des Bauteils parallel zueinander angeordnet sind, stellt die bevorzugte Federvorspannung zwischen den beiden Schenkeln sicher, dass sich der erste Schenkel und der zweite Schenkel in einer parallelen Ausrichtung zueinander befinden. Da keine winklige Ausrichtung zwischen den beiden Schenkeln vorliegt, ist gewährleistet, dass die Befestigungsschraube optimal in den Verbinder einsetzbar bzw. einschraubbar ist.

Vorliegende Erfindung umfasst zudem ein Verbindungsverfahren für ein erstes und ein zweites Bauteil mit einem Abstand dazwischen mithilfe des Verbinders, wie er in den verschiedenen Ausführungsformen oben beschrieben worden ist. Das Verbindungsverfahren weist die folgenden Schritte auf: Einsetzen des ersten Bauteils zwischen dem ersten und dem zweiten Schenkel des Verbinders und dabei Versetzen des ersten und zweiten Schenkels relativ zueinander geführt über die formschlüssige Verbindung und Befestigen eines zweiten Bauteils mit einer Befestigungsschraube am ersten Bauteil mit Verbinder durch Einschrauben der Befestigungsschraube in einem Befestigungsgewinde der zweiten Öffnung des zweiten Schenkels. Vorzugsweise weist das Verbindungsverfahren den weiteren Schritt auf: Versetzen eines Verstellelements in Anlage mit dem zweiten Bauteil durch Eindrehen der Befestigungsschraube in das Verstellelement, sodass Toleranzen zwischen dem ersten und zweiten Bauteil ausgeglichen werden.

Vorliegende Erfindung offenbart zudem ein Herstellungsverfahren für einen zumindest zweiteiligen Randverbinder, das die folgenden Schritte umfasst: Bereitstellen, vorzugsweise Spritzgießen, eines ersten Schenkels aus Kunststoff, der eine erste Öffnung und eine Schwenkachse umfasst, Bereitstellen, vorzugsweise Spritzgießen, eines zweiten Schenkels aus Kunststoff, der eine zweite Öffnung und zumindest eine Langlochaufnahme der Schwenkachse aufweist, und Einsetzen der Schwenkachse in die Langlochaufnahme, sodass der erste und zweite Schenkel verschwenkbar und relativ zueinander versetzbar angeordnet sind. Im Rahmen des erfindungsgemäßen Herstellungsverfahrens ist es weiterhin bevorzugt, ein Befestigungsgewinde an dem zweiten Schenkel vorzusehen, in dem eine Befestigungsschraube aufnehmbar ist, vorzugsweise mittels Anordnen einer Mutter in einem Käfig des zweiten Schenkels oder mittels Einformen oder Anformen eines Gewindes oder einer Mutter in oder an den zweiten Schenkel. Dieses Befestigungsgewinde dient gemäß obiger Beschreibung der Befestigung des Randverbinders in einer randnahen Bauteilöffnung des Bauteils. Zudem ist es bevorzugt, mit der Befestigungsschraube und dem genannten Befestigungsgewinde ein weiteres Bauteil an dem ersten Bauteil lediglich beabstandet um den ersten Schenkel des Verbinders zu befestigen. Des Weiteren ist es denkbar, einen größeren Abstand zwischen dem ersten und dem zweiten Bauteil mithilfe des Verbinders zu realisieren.

Gemäß einer weiteren bevorzugten Ausführungsform des erfindungsgemäßen Herstellungsverfahrens erfolgt das Bereitstellen eines Federarms in dem ersten oder zweiten Schenkel, mit dem der erste und der zweite Schenkel relativ zueinander federvorspannbar sind. Dieser Federarm und die damit erzeugte Federvorspannung zwischen den einander gegenüberliegend angeordneten Schenkeln gewährleistet eine optimale Ausrichtung der flächigen Schenkel an der Oberfläche des Bauteils. Vorzugsweise sind zwei einander gegenüberliegend angeordnete Federarme vorgesehen, die zungenartig ausgebildet sind. Während das eine Ende der Federarme am zweiten Schenkel befestigt ist, drückt das zweite Ende der Federarme auf den ersten Schenkel, sodass eine sich aufbauende Federvorspannung die beiden Schenkel gegeneinander vorspannt.

Gemäß einem weiteren bevorzugten Schritt des vorliegenden Herstellungsverfahrens wird ein Verstellelement in einem Gewindeelement des ersten Schenkels bereitgestellt, wobei ein Innengewinde des Gewindeelements des ersten Schenkels eine entgegengesetzte Gangrichtung im Vergleich zum Befestigungsgewinde des zweiten Schenkels aufweist.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Figur 1: eine erste bevorzugte Ausführungsform des erfindungsgemäßen Verbinders,
- Figur 2: eine zweite bevorzugte Ausführungsform des erfindungsgemäßen Verbinders mit Toleranzausgleichselement
- Figur 3: der Verbinder gemäß Figur 2 in Kombination mit einem Bauteil einer ersten Bauteildicke,
- Figur 4: der Verbinder gemäß Figur 2 in Kombination mit einem Bauteil einer zweiten Bauteildicke während des Einsetzens des Bauteils im Verbinder,
- Figur 5: der Verbinder in Kombination mit dem Bauteil aus Figur 4,
- Figur 6: schematische Ansicht des Verbinders gemäß Figur 2 in Kombination mit einem zweiten Bauteil und einer Befestigungsschraube,
- Figur 7: eine weitere bevorzugte Ausführungsform des erfindungsgemäßen Verbinders,
- Figur 8a: eine vergrößerte Darstellung des zweiten Schenkels des bevorzugten Verbinders gemäß Fig. 7, in einer ersten Einsetzposition der Mutter
- Figur 8b: eine vergrößerte Darstellung des zweiten Schenkels des bevorzugten Verbinders gemäß Fig. 7 in einer weiteren Einsetzposition der Mutter,
- Figur 9: eine bevorzugte Ausführungsform einer Mutter des bevorzugten Verbinders gemäß Fig. 7,
- Figur 10: eine seitliche Schnitt darstellung des Verbinders gemäß Fig. 7,
- Figur 11: eine vergrößerte Darstellung des eingekreisten Bereichs aus Fig. 10,
- Figur 12: ein weiteres bevorzugtes Detail aus der vergrößerten Darstellung des eingekreisten Bereichs aus Fig. 10,
- Figur 13: ein weiteres bevorzugtes Detail aus dem eingekreisten Bereich in Fig. 10 in einer vergrößerten Darstellung,
- Figur 14: eine Seitenansicht des bevorzugten Verbinders mit einer Befestigungsschraube,
- Figur 15: eine weitere Seitenansicht des bevorzugten Verbinders mit Befestigungsschraube,

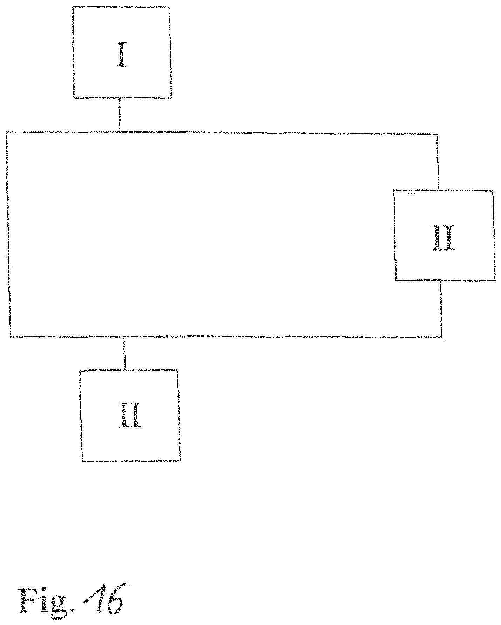

- Figur 16: ein Flussdiagramm einer bevorzugten Ausführungsform des erfindungsgemäßen Verbindungsverfahrens und

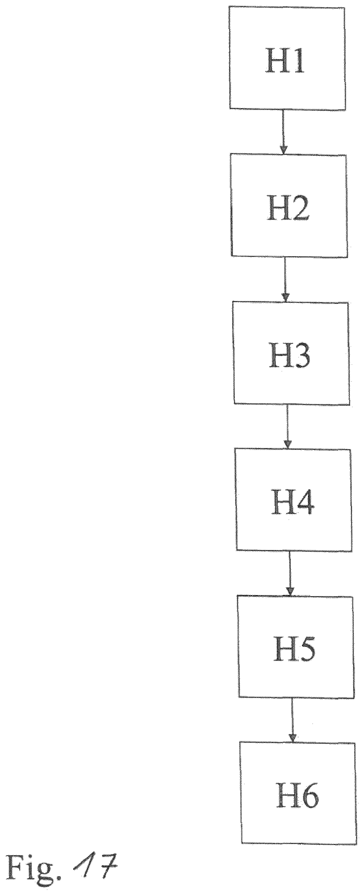

- Figur 17: ein Flussdiagramm einer bevorzugten Ausführungsform des erfindungsgemäßen Herstellungsverfahrens des Verbinders.

### 5. Detaillierte Beschreibung der bevorzugten Ausführungsformen vorliegender Erfindung

Vorliegende Erfindung umfasst einen Verbinder 1 unterschiedlicher Ausführungsformen. Der Verbinder 1 wird vorzugsweise in einer ersten Bauteilöffnung A1 eines ersten Bauteils B1 befestigt. Die erste Bauteilöffuung A1 ist nahe einem äußeren Rand des ersten Bauteils B1 angeordnet, sodass der Verbinder 1; 1' zum Herstellen einer Verbindung auf den Rand des ersten Bauteils B1 aufgesteckt wird. Daher wird der Verbinder 1; 1' auch als Randverbinder bezeichnet.

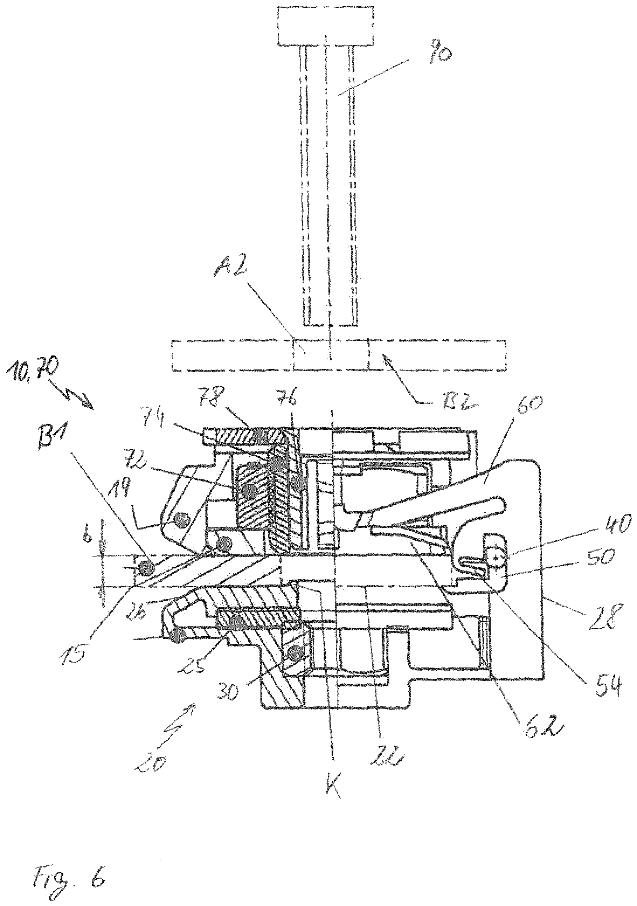

Der Verbinder 1; 1' stellt an der ersten Bauteilöffnung A1 vorzugsweise ein erstes Befestigungselement 30, beispielsweise ein Befestigungsgewinde in einer Mutter oder in einem angeformten Zylinder oder ein Verrastelement, bereit. Das erste Befestigungselement 30 ist mit einem zweiten Befestigungselement 90, beispielsweise eine Befestigungsschraube, verbindbar. Durchläuft das zweite Befestigungselement 90, beispielsweise eine zweite Bauteilöffnung A2 in einem zweiten Bauteil B2 (siehe Fig. 6), den Verbinder 1; 1' sowie die erste Bauteilöffnung A1 im ersten Bauteil B1, dann wird durch Einschrauben des zweiten Befestigungselements 90 in das erste Befestigungselement 30 das zweite Bauteil B2 mit dem ersten Bauteil B1 mithilfe des Verbinders 1; 1' verbunden. Dazu stellt der Verbinder 1; 1' das erste Befestigungselement 30 angrenzend bzw. am Ausgang der ersten Bauteilöffnung A1 bereit.

Der Verbinder 1; 1' umfasst zwei einander gegenüberliegend angeordnete Schenkel 10, 20 mit jeweils einer Öffnung 12, 22. Die Schenkel 10, 20 sind bevorzugt zumindest angrenzend an eine Bauteiloberfläche des ersten Bauteils B1 flächig ausgebildet. Flächig bedeutet in diesem Zusammenhang, dass die Schenkel 10, 20 angrenzend an die Bauteiloberfläche eine ebene Abstützung 14, 24 bereitstellen, die nicht zwingend als ein zusammenhängendes Flächenelement ausgebildet sein muss. Vielmehr sind alternativ zu einem zusammenhängenden Flächenelement auch strukturierte Abstützungen bevorzugt, die beispielsweise durch eine Vielzahl von Flächenelementen, wie Stege, Buckel oder dergleichen, gebildet werden.

Vorzugsweise ist angrenzend an die ebene Abstützung 14, 24 jeweils an der vom ersten Bauteil B1 abgewandten Seite eine strukturelle Verstärkung 15, 25 in den jeweiligen Schenkel 10, 20 eingefasst. Dies ist vorzugsweise eine Metall- oder Kunststoffscheibe, die als Lastverteiler im jeweiligen Schenkel 10, 20 dient. Zu diesem Zweck sind die Schenkel 10, 20 käfigartig aufgebaut, sodass Haltestrukturen, wie Stege, Brücken, Vertiefungen und/oder Absätze vorhanden sind, die die Verstärkung 15, 25 in ihrer Position halten.

Vorzugsweise werden die Schenkel 10, 20 aus Kunststoff bereitgestellt. Je nach Anwendungsfall des Verbinders 1; 1' werden hier auch Materialkombinationen, wie faserverstärkte Kunststoffe oder Hybridkonstruktionen aus Metall und Kunststoff eingesetzt. Vorzugsweise dient ein Spritzgussverfahren zum Herstellen des Verbinders (1; 1) mit den Schenkeln 10, 20. Im Rahmen des erfindungsgemäßen Herstellungsverfahrens werden die Schenkel 10, 20 aus Kunststoff bereitgestellt.

Der Schenkel 20 weist an der dem Bauteil B1 abgewandten Seite das erste Befestigungselement 30 in Form einer in einem Käfig gehaltenen Sechskantmutter 30 mit Befestigungsgewinde auf. Die Sechskantmutter 30 stützt sich vorzugsweise an der angrenzenden Verstärkung 25 ab oder ist mit ihr verbunden. Da die Sechskantmutter 30 oder ein anders geformtes Gewindeelement in den käfigartig ausgebildeten Schenkel 20 einsteckbar ist, sind Gewindeelemente mit unterschiedlichen Gewindegrößen mit dem Verbinder 1; 1' kombinierbar. Es ist ebenfalls bevorzugt, das erste Befestigungselement 30 integral im Schenkel 20 auszubilden.

Um ein Einsetzen des ersten Bauteils B1 zwischen den Schenkeln 10, 20 zu erleichtern, sind vorzugsweise Einführschrägen 16, 26 angrenzend an die Abstützungen 14, 24 vorgesehen. Sie unterstützen ein winkliges Öffnen der Schenkel 10, 20 und einen stetig gleitenden Übergang des ersten
Bauteils B1 von außerhalb des Verbinders 1; 1' zwischen die beiden Schenkel 10, 20 des Verbinders 1; 1'.

Die Schenkel 10, 20, die sich durch die flächige Abstützung 14, 24 auszeichnen, sind an einer umfänglichen Seite dieser Abstützung 14, 24 formschlüssig miteinander verbunden. Diese formschlüssige Verbindung gewährleistet zunächst eine Ausrichtung der Schenkel 10, 20 in Bezug zueinander, sodass die Öffnungen 12, 22 im Wesentlichen koaxial zueinander ausgerichtet sind. Dies gewährleistet das einfache Einsetzen des zweiten Befestigungselements 90, der Befestigungsschraube gemäß Fig. 6, in die Öffnungen 12, 22. Des Weiteren gewährleistet die formschlüssige Verbindung ein winkliges Aufklappen der Schenkel 10, 20 aus einer zuvor parallelen Anordnung, um das erste Bauteil B1 zwischen den Schenkeln 10, 20 anzuordnen. Zudem ermöglicht die formschlüssige Verbindung eine variable Abstandsänderung der Schenkel 10, 20 in Bezug zueinander, egal ob sie sich in paralleler oder winkliger Ausrichtung zueinander befinden. Diese Abstandsänderung stellt sicher, dass der Verbinder 1; 1' in seinem Abstand der Schenkel 10, 20 an unterschiedliche Bauteildicken b anpassbar ist, ohne seine strukturelle Einheit, seine optimale Positionierbarkeit und Ausrichtung der Öffnungen 12, 22 und seinen Zusammenhalt zu verlieren.

Die formschlüssige Verbindung zwischen den Schenkeln 10, 20 wird vorzugsweise durch eine in mindestens zwei Langlöchern 50 geführte Drehachse 40 gebildet. Dabei sind die Langlöcher 50 an einem der Schenkel 10, 20, vorzugsweise am Schenkel 20, und die Drehachse 40 am anderen Schenkel, vorzugsweise am Schenkel 10, vorgesehen. Gemäß einer bevorzugten Ausführungsform vorliegender Erfindung wird die Drehachse 40 durch zwei koaxial zueinander angeordnete Stege mit annähernd rundem Querschnitt gebildet. Diese Stege bestehen gemäß einer Alternative aus Kunststoff. Gemäß einer weiteren bevorzugten Ausführungsform wird eine durchgehende Drehachse aus Metall oder Kunststoff realisiert oder die oben genannten Stege sind aus Metall vorgesehen. Die Stege sind bezogen auf den Durchmesser der Schenkel 10, 20 radial auswärts angeordnet. Dadurch wird im Vergleich zu einer radial inneren Anordnung die Stabilität der Schenkel 10, 20 während des Verschwenkens verbessert.

Die Stege oder allgemein die Drehachse 40 sind/ ist in den Langlöchern 50 geführt. Vorzugsweise sind am Schenkel 20 mindestens zwei Stabilisierungsstege 28 vorgesehen, die senkrecht zur ebenen Abstützung 24 verlaufen. Innerhalb dieser Stege 28 sind Langlöcher 50 in Form von Aussparungen angeordnet, die vorzugsweise senkrecht oder auch winklig, aber jedenfalls außerhalb der Ebene der Abstützung 24, verlaufen. Die Langlöcher 50 sind an ihrer der Abstützung 24 abgewandten Seite geschlossen ausgebildet. Die der Abstützung 24 zugewandte Seite der Langlöcher 50 ist an ihrem an die Abstützung 24 angrenzenden Ende durchbrochen, um eine Einsetzöffnung 52 für die Drehachse 40 bzw. die Stege zu bilden. Vorzugsweise ist die Einsetzöffnung 52 zumindest teilweise durch eine im Stabilisierungssteg 28 ausgebildete federnde Zunge 54 verschlossen. Diese Zunge 54 verläuft gemäß einer Ausführungsform in Einsetzrichtung der Drehachse 40 und ist an der der Abstützung 24 zugewandten Seite am Stabilisierungssteg 28 befestigt. Dadurch kann die Zunge 54 beim Einsetzen der Drehachse 40 verdrängt werden, während sie ein Entfernen der Drehachse 40 aus dem Langloch 50 zumindest teilweise blockiert.

Die der Abstützung 24 zugewandte innere Fläche des Langlochs 50 ist vorzugsweise an ihrem oberen Ende annähernd rechtwinklig und nicht abgerundet ausgebildet. In ähnlicher Weise ist der Querschnitt der Drehachse 40 unrund ausgebildet. Dazu weist die der Abstützung 14 zugewandte Seite einen annähernd ebenen Flächenabschnitt auf, der in Richtung des geschlossenen Endes des Langlochs 50 abgewinkelt und nicht rund ist. Die Querschnittsgestalt der Drehachse 40 ist an die Endform des Langlochs 50 angepasst, um ein Aufklappen der Schenkel 10, 20 beim Einsetzen des ersten Bauteils B1 zu unterstützen und um eine Ausrichtung zumindest des Schenkels 10 mit einem negativen Winkel bezogen auf die Abstützung 24 des anderen Schenkels 20 zu vermeiden.

In einer erfindungsgemäßen Ausführungsform ist die Drehachse 40 stufenlos, also frei, versetzbar in den Langlöchern 50 gehalten. Dies wird durch eine ebene Gestaltung der inneren Flächen der Langlöcher 50 gewährleistet. Weiterhin bevorzugt weist die der Abstützung 24 abgewandten inneren Fläche der Langlöcher 50 eine abgestufte Struktur (nicht gezeigt) auf, in der die Drehachse 40 versetzt angeordnet werden kann. Diese Struktur bildet eine Zwischenverrastung zwischen den Endpunkten des Langlochs 50, um unterschiedliche Abstände zwischen den Schenkeln 10, 20 vorzuwählen oder einzustellen.

Während beide Langlöcher 50 in den zwei Stabilisierungsstegen 28 einseitig offen ausgebildet sind, ist es ebenfalls bevorzugt, nur eins der Langlöcher 50 offen auszubilden. Zudem ist es bevorzugt, die Stabilisierungsstege 28 in Form einer durchgehenden Wand vorzusehen, in der die Langlöcher 50 als ein Langloch miteinander verbunden sind. Um dort das Einsetzen der Drehachse 40 in das Langloch 50 zu erleichtern, sind vorzugsweise die Zungen 54 nur an den Enden des Langlochs 50 angeordnet.

Zur Unterstützung der Verbindung zum ersten Bauteil B1 ist das Befestigungselement 30 vorzugsweise in einer Senke der Stabilisierung 25 angeordnet. Des Weiteren ist die Stabilisierung 25 bevorzugt zwischen dem Käfig des Befestigungselements 30 und der Unterseite der Abstützung 24 eingefasst und in ihrer Position fixiert.

Gemäß einer weiteren Ausführungsform ist die Öffnung 22 innerhalb der Abstützung 24 von einem Kragen K umgeben, der in abgewandter Richtung vom Befestigungselement 30 vorsteht. Beim Einsetzen des ersten Bauteils B1 zwischen die Schenkel 10, 20 greift der Kragen K in die erste Bauteilöffnung A1 ein und dient so als Positionierhilfe für den Verbinder 1; 1'. Es ist ebenfalls bevorzugt, einen entgegengesetzt vorstehenden Kragen am Rand der Öffnung 12 in der Abstützung 14 vorzusehen (nicht gezeigt).

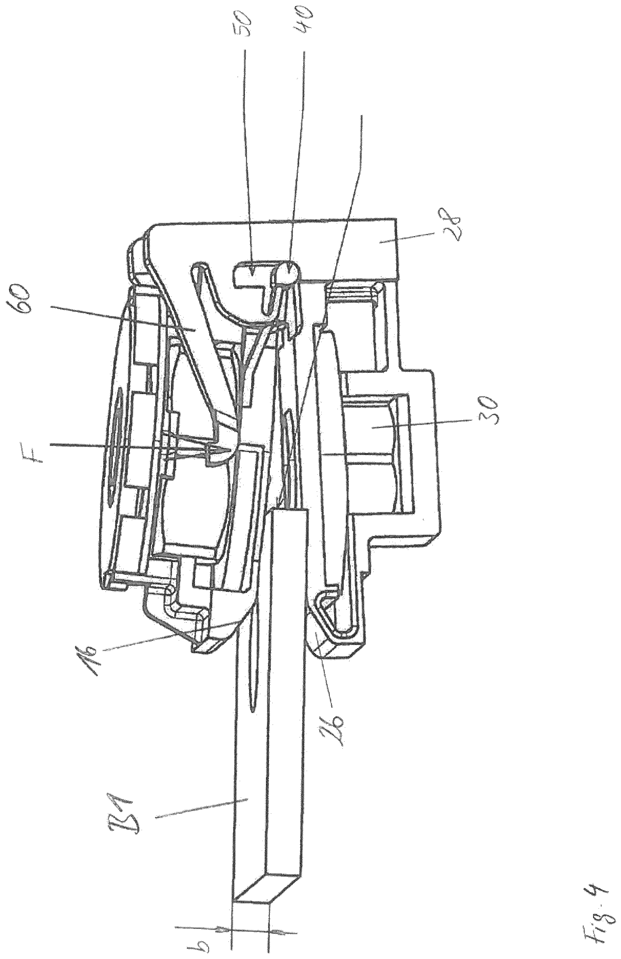

Zum Einsetzen der Drehachse 40 in die Langlöcher 50 wird diese an den federnden Zungen 54 vorbei in die Langlöcher 50 eingeschnappt. Gleichzeitig gleitet bevorzugt mindestens ein Federarm 60 des Schenkels 20 entlang einer Auflaufschräge 62 des Schenkels 10. Der mindestens eine Federarm 60 ist an dem Stabilisierungssteg 28 angelenkt und verläuft einwärts in die ebene Abstützung 24 hinein und in Richtung der ebenen Abstützung 24 geneigt. Durch das Auflaufen des mindestens einen Federarms 60, vorzugsweise mindestens zwei Federarme, wird der Federarm 60 von der Abstützung 24 weg ausgelenkt. Dadurch erzeugt er eine Druckkraft F (siehe Fig. 4) auf den Schenkel 10, sodass die beiden Schenkel 10, 20 gegeneinander gedrückt werden. Diese Druckkraft F der Schenkel 10, 20 gegeneinander eine Transportsicherung für den vorinstallierten Verbinder, so dass sich der Schenkel 10 nicht aus den Langlöchern 50 löst. Zudem unterstützt diese Druckkraft F eine Ausrichtung der Schenkel 10, 20 zum eingesetzten ersten Bauteil B1, wie unten näher erläutert ist. Es ist ebenfalls bevorzugt, dass der mindestens eine Federarm 60 erst eine Vorspannkraft in Richtung des Schenkels 20 erzeugt, wenn das Bauteil B1 zwischen den Schenkeln 10, 20 eingesetzt ist.

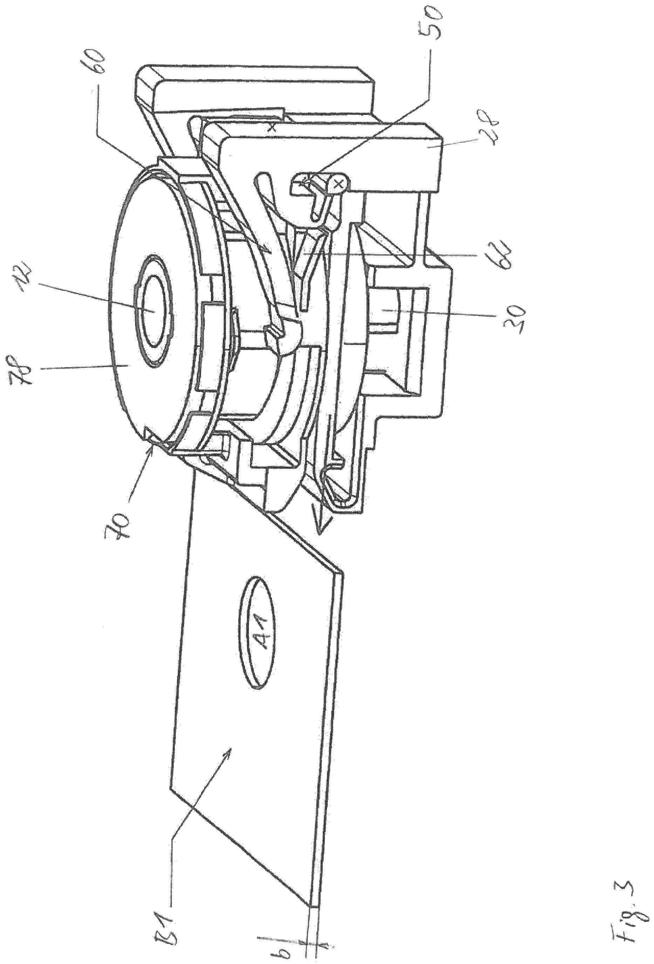

In den Figuren 3 und 4 sind erste Bauteile B1 mit unterschiedlichen Bauteildicken b dargestellt, auf deren Rand der Verbinder 1; 1' aufgesteckt wird. In Abhängigkeit von der Bauteildicke b verändert sich die Position der Drehachse 40 in den Langlöchern 50. Gleichzeitig gewährleistet die formschlüssige Verbindung der Schenkel 10, 20 ein ebenes Auflegen der Abstützungen 14, 24 auf dem ersten Bauteil B1, sodass die Öffnungen 12, 22 und A1 im Wesentlichen koaxial zueinander ausgerichtet sind. Daraus folgt, dass die den Schenkeln 10, 20 durch die formschlüssige Verbindung gegebenen Bewegungsfreiheitsgerade eine optimale Dickenanpassung des Verbinders in einem bevorzugten Bauteildickenbereich von 0,5 mm bis 8 mm, vorzugsweise 0,8 mm bis 4 mm, gewährleisten. Des Weiteren wird durch die drehbare Lagerung der Drehachse 40 in den Langlöchern 50 ein Verkanten zwischen den Schenkeln 10, 20 beim Aufschieben des ersten Bauteils B1 vermieden.

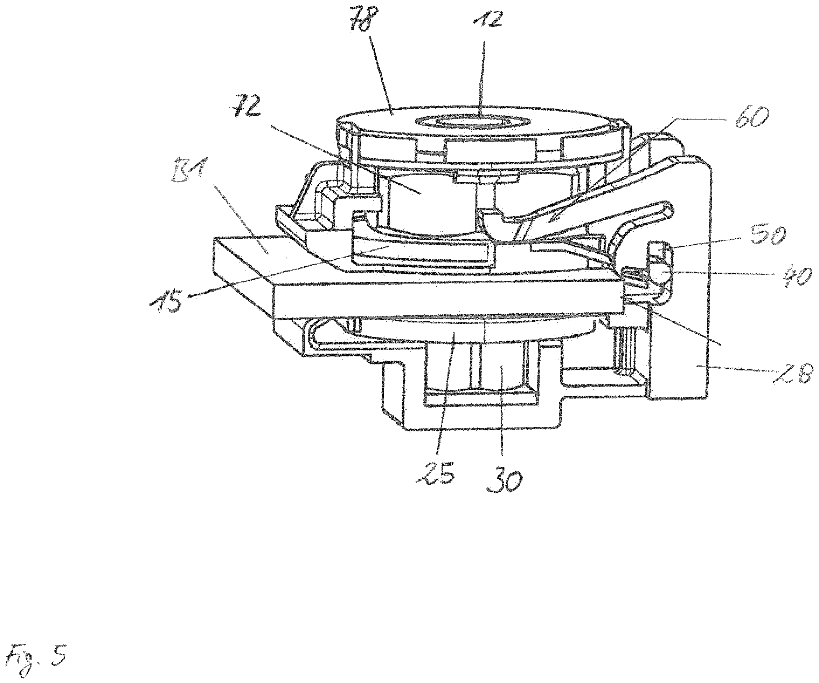

Während des Einsetzens des ersten Bauteils B1 zwischen die Schenkel 10, 20 wird der Schenkel 10 gegen die Druckkraft F der Federarme 60 winklig ausgelenkt. Nachdem die führende Seite des ersten Bauteils B1 den Angriffspunkt des Federanns 60, vorzugsweise die Mitte der Abstützung 14 passiert hat, wird die Abstützung 14 flächig auf die Oberfläche des ersten Bauteils B1 gedrückt. Gleichzeitig führt die Drehachse 40 eine entsprechende Ausgleichsbewegung innerhalb der Langlöcher 50 aus, wie man im Vergleich der Figuren 4 und 5 erkennen kann. In Figur 5 ist das erste Bauteil B1 vollständig zwischen den Schenkeln 10, 20 eingesetzt.

Nun wird das Befestigungselement 90 durch die Öffnungen 12, 22 und die Bauteilöffnung A1 im Befestigungselement 30 befestigt, vorzugsweise wird die Befestigungsschraube 90 in das Befestigungsgewinde 30 eingeschraubt. Um ein zweites Bauteil (nicht gezeigt) zumindest um den Schenkel 10 vom ersten Bauteil B1 beabstandet am ersten Bauteil B1 zu befestigen, wird dieses mit seiner Bauteilöffnung oberhalb der Öffnung 12 angeordnet, bevor das Befestigungselement 90 befestigt wird. Es versteht sich, dass somit auch mehr als zwei Bauteile mit jeweils einer Bauteilöffnung mithilfe des Verbinders 1; 1' miteinander verbunden werden können.

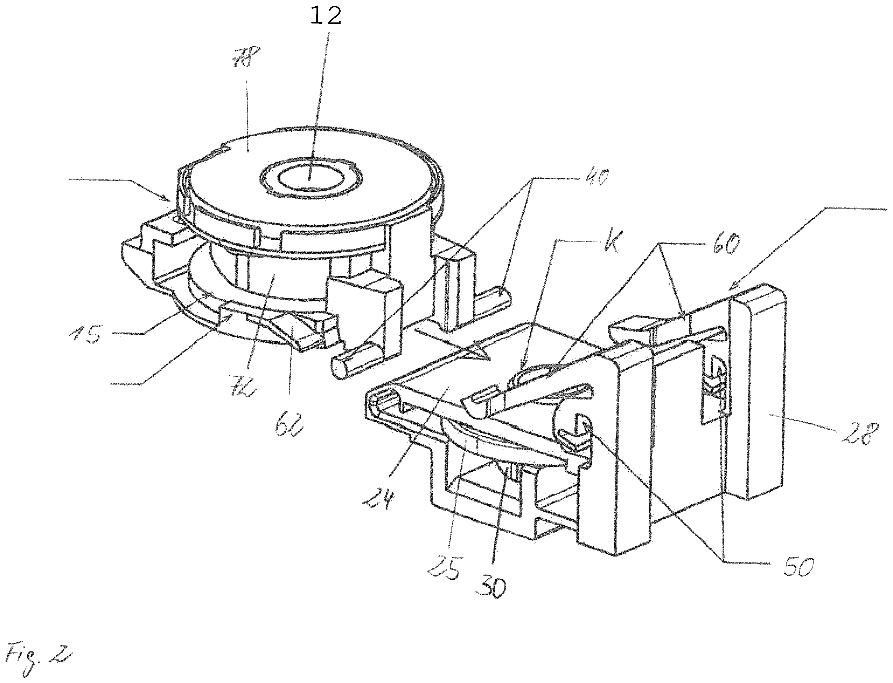

Die Figuren 2 bis 6 zeigen eine weitere bevorzugte Ausführungsform des Verbinders 1', dessen Schenkel 10 mit einem Toleranzausgleichselement 70 ausgestattet ist. Abgesehen vom Toleranzausgleichselement weist der Verbinder 1' die gleichen konstruktiven Merkmale wie der Verbinder 1 auf. Als Toleranzausgleichselement 70 weist der Schenkel 10 angrenzend an die Verstärkung 15, vorzugsweise eine Metallscheibe, ein Gewindeelement 72 auf. Gemäß einer bevorzugten Ausführungsform vorliegender Erfindung ist das Gewindeelement 72 eine Sechskantmutter oder ein Gewindezylinder, das in einem Käfig 19 des Schenkels 10 gehalten ist. Das Gewindeelement 72 umfasst ein Innengewinde einer ersten Gangrichtung, in dem ein Verstellelement 74 geführt ist. Die erste Gangrichtung des Innengewindes des Gewindeelements 72 ist einer zweiten Gangrichtung des Befestigungsgewindes im Befestigungselement 30 entgegengesetzt. Sobald die Befestigungsschraube 90 mit einem Außengewinde passend zum Befestigungsgewinde in das Verstellelement 74 eingedreht wird, erzeugt ein im Inneren des Verstellelements 74 angeordneter Mitschlepper 76 durch eine Reibschlussverbindung zwischen der Befestigungsschraube 90 und dem Verstellelement 74 ein Mitdrehen des Verstellelements 74. Dadurch wird das Verstellelement 74 mit der Befestigungsschraube 90 mitgedreht und aus dem Gewindeelement 72 herausgedreht, bis es in Anlage mit dem zweiten Bauteil B2 kommt. Dort stützt sich das Verstellelement 74 vorzugsweise über eine Stützscheibe 78, beispielsweise eine Stahl- oder Kunststoffscheibe, ab. Die Stützscheibe 78 wird durch umfängliche Stege unterstützt. Der Mitschlepper 76 besteht aus einem metallischen Federelement, einer Kunststoffschicht oder einem anderen elastischen oder strukturell mit einem bestimmten Drehmoment der Befestigungsschraube 90 überwindbaren Konstruktion.

Da eine weitere Drehung des Verstellelements 74 verhindert ist, überwindet die Befestigungsschraube 90 den Reibschluss des Mitschleppers, wird weiter in den Verbinder 1' eingeschraubt und im Befestigungselement 30 befestigt.

Wie oben bereits erwähnt worden ist, wird der Verbinder 1; 1' vorzugsweise durch Spritzgießen hergestellt. Es sind auch andere Formgebungsverfahren für Kunststoffe geeignet, sofern die Stabilität des Verbinders 1; 1' gewährleistet ist. In entsprechenden Spritzgussformen werden die Negative der oben beschriebenen strukturellen Merkmale vorgesehen und nachfolgend mit Kunststoff gefüllt.

Nach dem Entformen der Schenkel 10, 20 wird das Befestigungselement 30 im Schenkel 20 installiert. Gemäß einer weiteren bevorzugten Ausführungsform wird vorzugsweise das oben beschriebene Toleranzausgleichselement 70 am Schenkel 10 befestigt, um den Verbinder 1' zu erhalten.

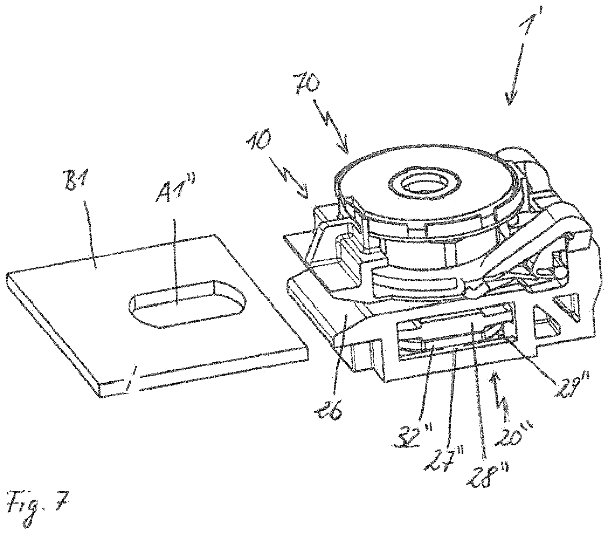

Eine weitere bevorzugte Ausgestaltung des Verbinders 1" ist in den Figuren 7 bis 15 dargestellt. Bezugszeichen, die sich auf gleiche konstruktive Elemente wie in den zuvor beschriebenen Ausführungsformen beziehen, sind mit den gleichen Bezugszeichen bezeichnet. Des Weiteren gelten bereits oben diskutierte Eigenschaften und Funktionen von konstruktiven Elementen in gleicher Weise für die gleichen konstruktiven Elemente weiterer Ausgestaltungen, es sei denn, dass Unterschiede aus der Beschreibung und/oder den Zeichnungen deutlich werden.

Gemäß einer weiteren bevorzugten Ausgestaltung des Verbinders 1' ist es erforderlich, die beiden Bauteile B1, B2 mithilfe einer hochfesten Verschraubung aneinander zu befestigen. Damit wird eine sichere Verschraubung der Bauteile B1, B2 aneinander erzielt, die sich nicht lösen kann. Für eine derartige hochfeste Verschraubung wird beispielsweise eine Schraube 90 mit einem Gewinde M6 und einer Vorspannkraft von 10kN eingesetzt.

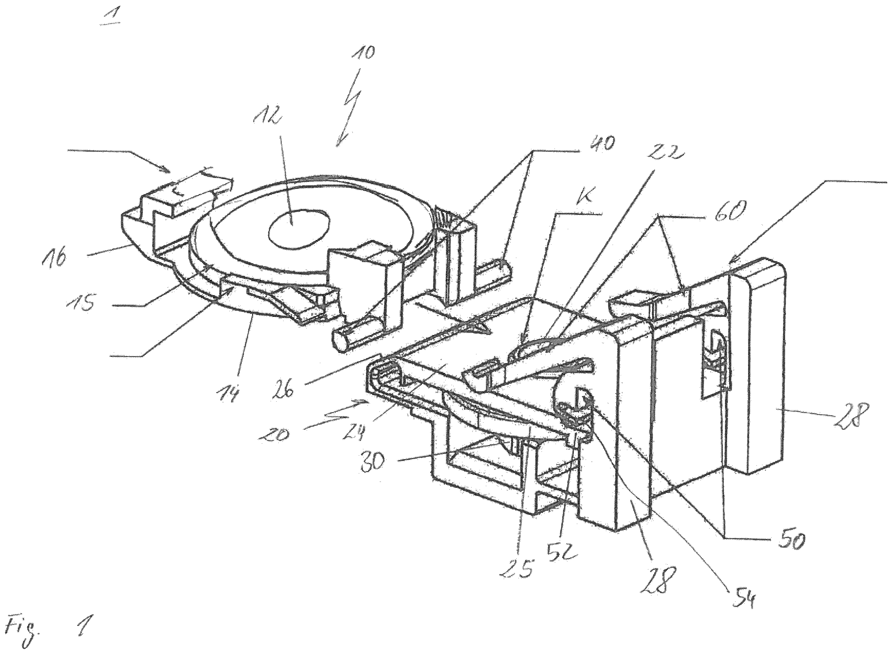

Bei dem Verbinder 1; 1' der Figuren 1 bis 6 geht der Kraftfluss der befestigenden Verschraubung durch den Verbinder 1; 1' und belastet den Werkstoff des Verbinders 1. Der Verbinder 1,1' besteht bevorzugt aus Kunststoff, gemäß einer Ausführungsform aus Polypropylen (PP), der nur eine begrenzte Druckfestigkeit aufweist. Somit gibt der Kunststoff durch sein Kriechverhalten einer befestigenden Vorspannung nach, wodurch die Vorspannung relaxiert und die Befestigung des Verbinders 1; 1' beeinträchtigt werden kann.

Die Figuren 7 bis 15 zeigen eine bevorzugte Ausführungsform vorliegender Erfindung, bei der bevorzugt die befestigende Vorspannung weitestgehend erhalten bleibt. Zudem wird der Schenkel 10 und weiter bevorzugt das oben beschriebene Toleranzausgleichselement 70 in der befestigenden Verschraubung 90, 30' festgeklemmt, um Kriechvorgänge im Material des Verbinders 1" zu reduzieren.

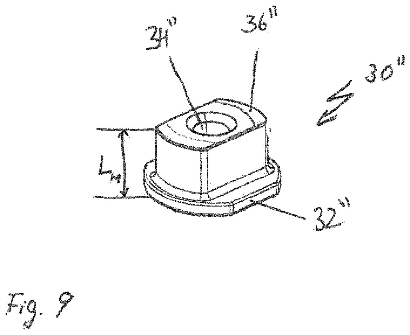

Um den Schenkel 20" am ersten Bauteil B1 zu befestigen, weist das Bauteil B1 die Bauteilöffnung A1" auf. Die Bauteilöffnung A1" dient der Aufnahme einer länglich ausgestalteten Mutter 30", wie sie gemäß einer Ausführungsform vorliegender Erfindung in Fig. 9 gezeigt ist. Um eine bevorzugte Verdrehsicherung der Mutter 30" mithilfe der Bauteilöffnung A1' bereitzustellen, sind Mutter 30' und Bauteilöffnung A1" unrund, hier bevorzugt die Bauteilöffnung A1" als Langloch und die Mutter 30" im Querschnitt ellipsenförmig, ausgebildet. Die in ihrer Längsrichtung, also parallel zur Gewindeöffnung, in die Bauteilöffnung A1" ragende Mutter 30" wird somit formschlüssiggegen Verdrehung um ihre Längsachse in der Bauteilöffnung A1" gehalten. Neben der Verdrehsicherung stellt die unrunde Querschnittsfläche der Mutter 30" auch eine zusätzliche Kontakt- oder Anlagefläche 36" der Mutter 30" an der Verstärkung 15 des Schenkels 10 bereit, wie unten näher erläutert wird. Neben der hier beschriebenen ellipsenförmigen Querschnittsgestaltung der Mutter 30" sind aber auch andere Mutternkonstruktionen und daran angepasste Bauteilöffnungen im Bauteil B1 anwendbar, sofern durch eine konstruktive Gestaltung der Mutter 30" und/oder des Schenkels 20" und/oder der Bauteilöffnung A1" eine Verdrehsicherung und eine ausreichende Abstützung des zweiten Schenkels 10" an der Mutter 30" gewährleistet sind.

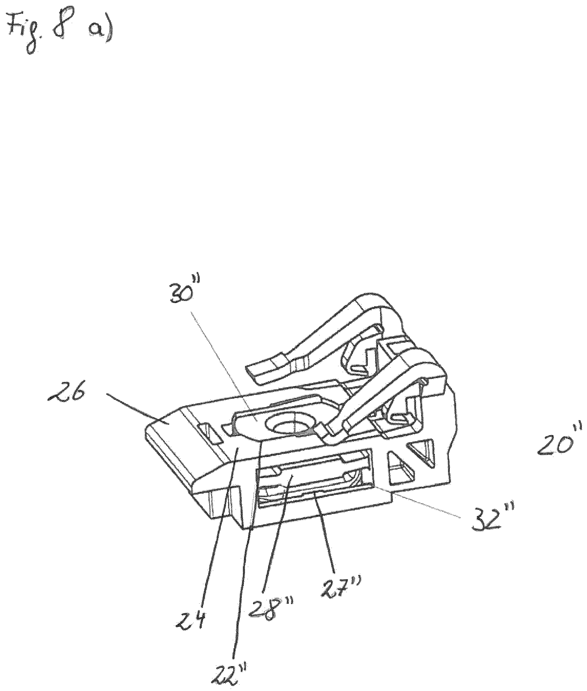

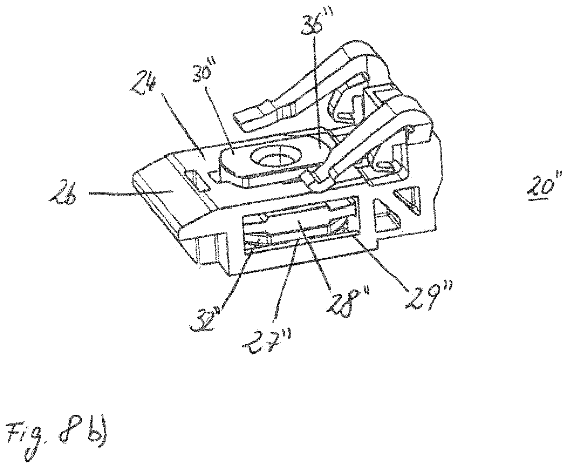

Wie man anhand von Fig. 8 erkennen kann, ist die Länge L der Mutter 30' derart, dass sie über die Abstützung 24 des Schenkels 20'' hinausragt. Die Mutter 30'' ist gemäß einer bevorzugten Ausführungsform in Fig. 9 gezeigt. Sie weist neben der ellipsenförmigen Querschnittsgestalt und der bestimmten Länge L_{M} einen umfänglichen Kragen 32" auf. Der Kragen 32" steht radial über den übrigen Mutternkörper über und ist vorzugsweise an einem axialen Ende der Mutter 30" angeordnet. Es ist ebenfalls bevorzugt, den Kragen 32" radial unterbrochen auszugestalten. Innerhalb der Gewindeöffnung 34" weist die Mutter 30" ein Gewinde angepasst an die Befestigungsschraube 90 auf.

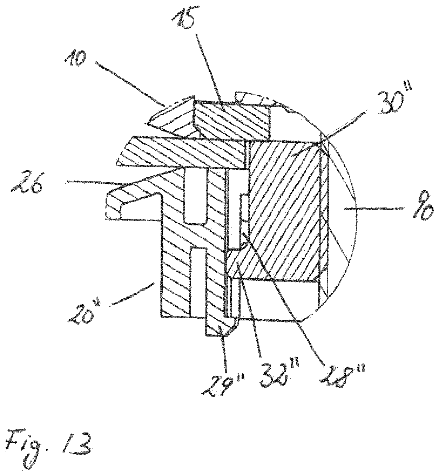

Die Mutter 30" weist zudem bezogen auf die Gewindeöffnung 34" bevorzugt eine Querschnittsfläche A_{M} auf. Die Querschnittsfläche A_{M} ist ausreichend groß, um vorzugsweise in einem Randbereich der Mutter 30" eine Abstützung bzw. eine Kontaktfläche 36" für den weiteren Schenkel 10' bereitzustellen. Da die Mutter 30" aufgrund ihrer Länge L_{M} die Bauteilöffnung A1" durchgreift, stützt sie sich bevorzugt an der Verstärkung 15" ab. Dabei ist vorzugsweise kein relaxierendes Material, beispielsweise des Schenkels 10", in der Abstützung zwischengestaltet, sodass eine direkte Abstützung zwischen der Mutter 30", die vorzugsweise aus Stahl besteht, und der Verstärkung 15", die vorzugsweise ebenfalls aus Metall besteht, erfolgt (siehe Fig. 13). In diesem Zusammenhang ist es weiterhin bevorzugt, die zwischen dem Kopf der Befestigungsschraube 90 und der Verstärkung 15 zwischengeschalteten Element aus annähernd relaxationsfreiem Material bereitzustellen. Daher sind vorzugsweise die Elemente 72, 74, 76 des Toleranzausgleichselements 70 aus relaxationsfreiem Kunststoff oder aus Metall.

Wie oben bereits angedeutet worden ist, besteht die Mutter 30" zu diesem Zweck gemäß einer Ausführungsform vorliegender Erfindung aus einem relaxionsfreien Material, wie beispielsweise Stahl oder einem ähnlichen Metall. Keramik oder ähnlichem.

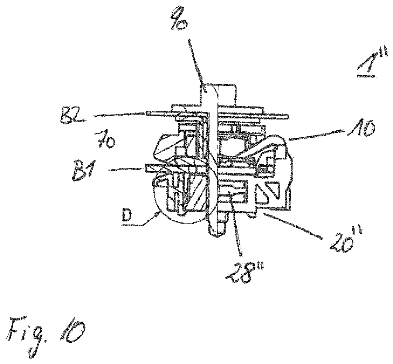

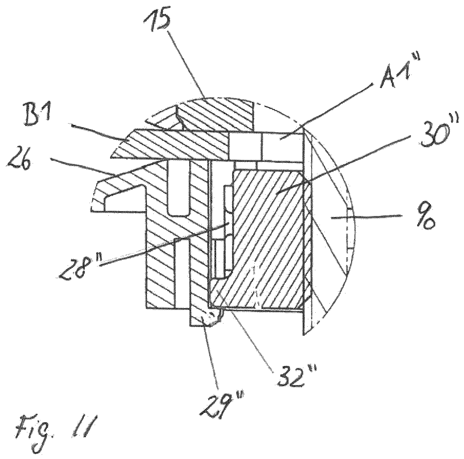

Fig. 10 zeigt eine teilweise geschnittene Seitenansicht des Verbinders 1", der die beiden Bauteile B1 und B2 über einen Toleranzausgleich 70 miteinander verbindet. Der eingekreiste Bereich D ist vergrößert und in unterschiedlichen Phasen der Installation des Verbinders 1" mit Mutter 30" in den Figuren 11 bis 13 gezeigt.

Bezugnehmend auf Fig. 8a wird die Mutter 30" in Richtung des Schenkels 10 in den Schenkel 20" eingesetzt. Dabei wird sie in Längsrichtung in die Öffnung 22" zumindest ansatzweise eingeschoben, die in ihrer Form an die Querschnittsgestalt der Mutter 30" angepasst ist. In einer ersten Einsetzposition verrastet der Kragen 32" hinter einem Rasthaken 29", der einen Hinterschnitt entgegen der Einsetzrichtung der Mutter 30" bildet. Der Rasthaken 29" ist vorzugsweise innerhalb des Käfigs des Schenkels 20" angeordnet. Mithilfe des Rasthakens 29" wird die Mutter 30" verliersicher im Käfig des Schenkels 20" gehalten.

Vorzugsweise ist ein radial einwärts ragender und federnd angeordneter Nocken oder Steg 27" am Käfig des Schenkels 20" vorgesehen. Der Nocken 27" verhindert in der ersten Einsetzposition ein weiteres Einschieben der Mutter 30' in den Schenkel 20", da der Nocken 27" die weitere Bewegung des Kragens 32" blockiert. Der Kragen 32" wird somit bevorzugt zwischen Rasthaken 29" und Nocken 27" gehalten. Auf diese Weise ist gewährleistet, dass die eingesetzte Mutter 30" nicht über die Abstützung 24 hinausragt. Zudem wird ein Einsetzen des Bauteils B1 nicht durch die Mutter 30" behindert. Des Weiteren stellt diese lösbare Fixierung eine Transportsicherung für die Mutter 30" im Schenkel 20" bereit.

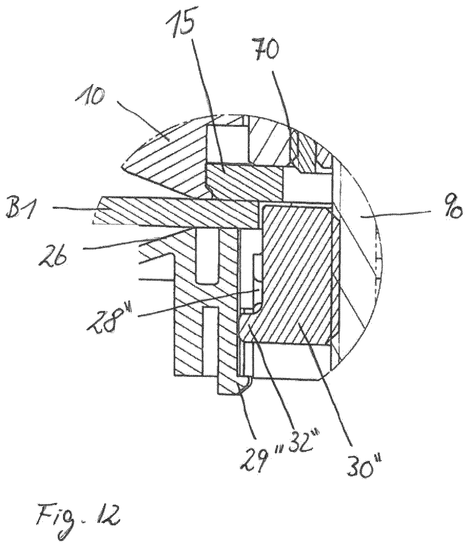

Nachdem das erste Bauteil B1 zwischen den Schenkeln 10, 20" eingesetzt worden ist, wird die Befestigungsschraube 90 durch die Bauteile B1, B2 in die Mutter 30" eingeschraubt. Bei diesem Vorgang wird die Mutter 30" axial in Richtung des Schenkels 10 versetzt. Dabei löst sich zunächst der Kragen 32" aus der Fixierung zwischen Rasthaken 29" und Nocken 27" und die Mutter 30" ragt axial über die Abstützung 24 hinaus (siehe Fig. 12, 8b).

Durch weiteres Drehen der Befestigungsschraube 90 wird die Mutter 30" weiter aufgeschraubt, sodass der Kragen 32" am Federsteg 28" anliegt. Vorzugsweise sind einander gegenüberliegend zwei Federstege 28" vorgesehen, an denen sich der Kragen 32" und somit die Mutter 30" an ihren ellipsenförmigen Längsseiten abstützt.

In dieser Position, die in Fig. 12 gezeigt ist, ragt die Mutter 30" in die Bauteilöffnung A1" hinein. Im Vergleich zur Ausführungsform des Verbinders 1 ragt die Verstärkung 15, vorzugsweise eine Metallscheibe oder Stahlscheibe mit Durchgangsöffnung, radial in die Bauteilöffnung A1" hinein. Dies resultiert bevorzugt aus der ellipsenförmigen Querschnittsgestalt der Mutter 30" und der daran angepassten Öffnung 22" im Schenkel 20",

Wenn die Befestigungsschraube 90 weiter angezogen wird, werden die Federstege 28" in Richtung des Schenkels 10 verformt, bis die Mutter 30" an der bevorzugten Stahlscheibe 15 zur Anlage kommt (siehe Fig. 13). Nun geht der Kraftfluss der Befestigung des Verbinders 1" vorzugsweise ausschließlich durch annähernd relaxationsfreies Material oder ein Material, bei dem die Relaxation von eingeprägten mechanischen Druckspannungen vemachlässigbar gering ist. Dies setzt voraus, dass auch das Gewindeelement 72, das Verstellelement 74 und die Stützscheibe 78 aus annähernd relaxationsfreiem Material, wie beispielsweise Metall, bestehen. Demnach kann die Befestigungsschraube 90 mit der gewünschten Vorspannkraft angezogen werden.

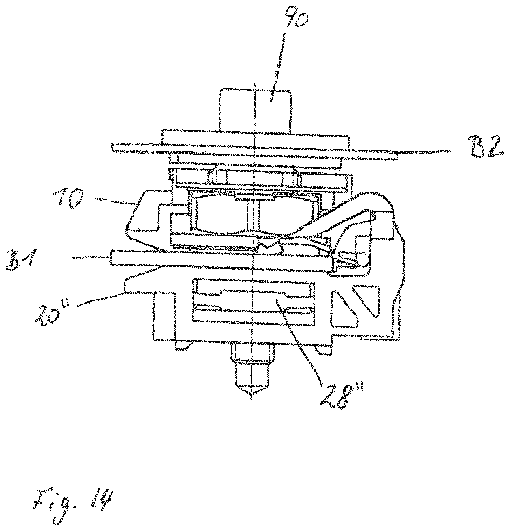

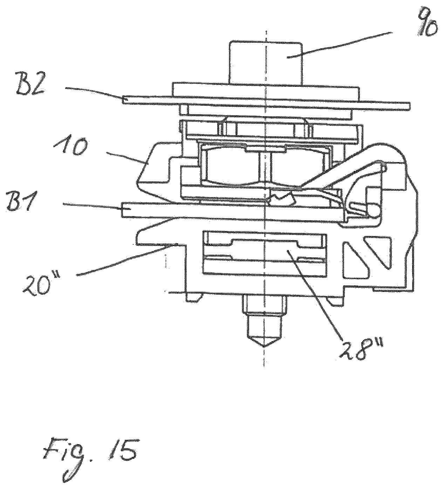

Beim Anziehen der Befestigungsschraube 90 wird die Mutter 30" und damit der Kragen 32" axial gegen die Federkraft der Federstege 28" versetzt. Dadurch wird der Schenkel 20" über die Federstege 28" gegen das Bauteil B1 gedrückt bzw. dort geklemmt. Die Verformung der Federstege 28", die vorzugsweise einseitig oder zweiseitig befestigt sind, ist variabel, um den Schenkel 20" an unterschiedliche Dicken des ersten Bauteils B1 anpassen zu können. Vorzugsweise sind die Federstege 28" im nicht ausgelenkten Zustand entgegen der Befestigungsrichtung der Mutter 30" gebogen. Dadurch wird ein größerer Auslenkungsbereich der Mutter 30" und somit ein größerer Toleranzbereich für die Dicke des ersten Bauteils B1 bereitgestellt. Zudem veranschaulichen die Fig. 14 und 15 die Auslenkung der Federstege 28" in axialer Richtung der Befestigungsschraube 90, wenn die Mutter 30" festgezogen wird.

Die Klemmkraft des Schenkels 20" am Bauteil B1 liegt bevorzugt zwischen 3 % und 6 % der durch die Befestigungsschraube 90 aufgebrachten Vorspannkraft. Bei einer Befestigungsschraube mit einem M6-Gewinde wird dadurch beispielsweise eine Klemmkraft von 300 bis 600 N erzielt. Diese Klemmkraft ist ausreichend hoch für einen sicheren Klemmsitz des Schenkels 20" und somit des Verbinders 1". Die Klemmkraft ist zudem ausreichend niedrig, sodass das Material des Schenkels 20" vorzugsweise kein Kriechverhalten zeigt. Damit werden die Klemmkräfte nicht relaxiert und die Befestigung des Schenkels 20" am ersten Bauteil B1 nicht beeinträchtigt. Daraus folgt, dass die Vorspannkraft der Verschraubung erhalten bleibt und vorzugsweise der Kraftfluss der Verschraubung ausschließlich durch Metall, vorzugsweise Stahl, geleitet wird.

### Bezugszeichenliste

- 1; 1': Verbinder
- B1: erstes Bauteil
- B2: zweites Bauteil
- A1: Bauteilöffnung im ersten Bauteil
- A2: Bauteilöffnung im zweiten Bauteil
- 10, 20, 20": Schenkel
- 12, 22, 22": Öffnung
- 14, 24: Abstützung
- 15, 25: Verstärkung
- 16, 26: Einführschräge
- 27": Nocken
- 28": Federsteg
- 29": Rasthaken
- 30: erstes Befestigungselement
- 40: Drehachse
- 50: Langlöcher
- 52: Einsetzöffnung
- 54: Zunge
- 60: Federarm
- 62: Auflaufschräge
- 70: Toleranzausgleichselement
- 72: Gewindeelement
- 74: Verstellelement
- 76: Mitschlepper
- 78: Stützscheibe
- 90: zweites Befestigungselement
- b: Bauteildicke

## Patentansprüche

1. Verbinder (1; 1') für mindestens ein erstes (B1) und ein zweites Bauteil (B2) mit einem Abstand dazwischen, wobei der Verbinder (1; 1') ein zumindest zweiteiliger Randverbinder ist, der zum Herstellen einer Verbindung auf den Rand des ersten Bauteils (B1) aufsteckbar ist und die folgenden Merkmale aufweist:
einen ersten Schenkel (10) mit einer ersten Öffnung (12) als ein erstes Teil und einen zweiten Schenkel (20) mit einer zweiten Öffnung (22) als ein zweites Teil,
**dadurch gekennzeichnet, dass** die beiden Schenkel (10, 20) über eine einseitige formschlüssige Verbindung (40, 50) bewegbar miteinander verbunden sind, sodass
ein Abstand zwischen dem ersten (10) und dem zweiten Schenkel (20) in einem vorgegebenen Intervall frei oder stufenweise einstellbar ist und dass
ein Bauteil (B1) mit einer Bauteilöffnung (A1) zwischen dem ersten (10) und dem zweiten Schenkel (20) aufnehmbar und der Verbinder (1; 1') über ein Befestigungselement (90) in der Bauteilöffnung (A1) befestigbar ist, wobei
der erste (10) und der zweite Schenkel (20) über eine Schwenkachse (40) miteinander verbunden und um die Schwenkachse (40) verschwenkbar angeordnet sind, wobei die Schwenkachse (40) senkrecht zu ihrer Verlaufsrichtung versetzbar ist.

2. Verbinder (1; 1') gemäß Anspruch 1, dessen Schwenkachse (40) in zwei gegenüberliegend positionierten Langlöchern (50) angeordnet ist, die eine Längserstreckung außerhalb einer Fläche des ersten und des zweiten Schenkels (20) aufweisen.

3. Verbinder (1; 1') gemäß einem der vorhergehenden Ansprüche , dessen zweiter Schenkel (20) ein Befestigungsgewinde angrenzend an die zweite Öffnung (22) aufweist, das vorzugsweise durch eine in einem Käfig gehaltene Mutter (30) oder durch ein in den zweiten Schenkel (20) eingeformtes Gewinde gebildet wird.

4. Verbinder (1; 1'; 1") gemäß Anspruch 3, in dem das Befestigungsgewinde durch eine in einem Käfig gehaltene Mutter (30; 30") gebildet wird, die vorzugsweise innerhalb des Käfigs seitlich bewegbar ist.

5. Verbinder (1") gemäß Anspruch 4, in dem die Mutter (30") eine Längserstreckung aufweist, so dass sie in einem befestigten Zustand des zweiten Schenkels (10") die Bauteilöffnung (A1') des ersten Bauteils (B1) durchläuft, um an dem ersten Schenkel (10) abstützbar zu sein.

6. Verbinder (1") gemäß Anspruch 5, in dem der zweite Schenkel (20") über die Mutter (30") gegen das erste Bauteil (B1) in einen Presssitz verspannbar ist.

7. Verbinder (1") gemäß Anspruch 5 oder 6, in dem der erste Schenkel (10') eine Verstärkung (15), vorzugsweise eine Metallscheibe, aufweist, die zumindest teilweise in die Bauteilöffnung (A1') ragt, sodass die Verstärkung (15) durch die Mutter (30") angreifbar ist.

8. Verbinder (1; 1') gemäß einem der vorhergehenden Ansprüche, dessen erster Schenkel (10) ein Toleranzausgleichselement (70) zum Ausgleich von Toleranzen zwischen dem ersten (B1) und zweiten Bauteil (B2) aufweist.

9. Verbinder (1; 1'; 1") gemäß Anspruch 3, dessen erster Schenkel (10) ein Gewindeelement (72) umfasst, in dessen Innengewinde ein Verstellelement (74) geführt ist, wobei eine erste Gangrichtung des Innengewindes einer zweiten Gangrichtung des Befestigungsgewindes des zweiten Schenkels (20) entgegengesetzt ist.

10. Verbinder (1; 1'; 1") gemäß Anspruch 9, dessen Verstellelement (74) einen inneren Mitschlepper (76) umfasst, über den eine Reibschlussverbindung mit einer Befestigungsschraube (90) herstellbar ist.

11. Verbinder (1; 1'; 1") gemäß einem der vorhergehenden Ansprüche, in dem der erste (10) und zweite Schenkel (20) über mindestens einen Federarm (60) relativ zueinander vorspannbar sind.

12. Verbindungsverfahren für ein erstes (B1) und ein zweites Bauteil (B2) mit einem Abstand dazwischen mithilfe des Verbinders (1; 1'; 1") nach einem der vorhergehenden Ansprüche, das die folgenden Schritte aufweist:
Einsetzen (I) des ersten Bauteils (B1) zwischen dem ersten (10) und dem zweiten Schenkel (20) des Verbinders und dabei Versetzen des ersten und zweiten Schenkels relativ zueinander geführt über die formschlüssige Verbindung (40, 50) und
Befestigen (III) eines zweiten Bauteils (B2) mit einer Befestigungsschraube (90) am ersten Bauteil (B1) mit Verbinder (1; 1') durch Einschrauben der Befestigungsschraube (90) in ein Befestigungsgewinde der zweiten Öffnung (22) des zweiten Schenkels (20).

13. Verbindungsverfahren gemäß Anspruch 12, mit dem weiteren Schritt:
Versetzen (II) eines Verstellelements (74) in Anlage mit dem zweiten Bauteil (B2) durch Eindrehen der Befestigungsschraube (90) in das Verstellelement (74), sodass Toleranzen zwischen dem ersten (B1) und zweiten Bauteil (B2) ausgeglichen werden.

14. Herstellungsverfahren für einen Verbinder (1; 1'; 1") gemäß einem der Ansprüche 1 bis 11, wobei der Verbinder (1; 1'; 1") ein zumindest zweiteiliger Randverbinder ist, **gekennzeichnet durch** die folgenden Schritte:
a. Bereitstellen (H1), vorzugsweise Spritzgießen, eines ersten Schenkels (10) aus Kunststoff, der eine erste Öffnung (12) und eine Schwenkachse (40) umfasst,
b. Bereitstellen (H2), vorzugsweise Spritzgießen, eines zweiten Schenkels (20) aus Kunststoff, der eine zweite Öffnung (22) und zumindest eine Langlochaufnahme (50) der Schwenkachse (40) aufweist, und
c. Einsetzen (H4) der Schwenkachse (40) in die Langlochaufnahme (50), sodass der erste (10) und zweite Schenkel (20) verschwenkbar und relativ zueinander versetzbar angeordnet sind.

15. Herstellungsverfahren gemäß Anspruch 14 mit dem weiteren Schritt:
Vorsehen (H5) eines Befestigungsgewindes an dem zweiten Schenkel (20), in dem eine Befestigungsschraube (90) aufnehmbar ist, vorzugsweise mittels Anordnen einer Mutter in einem Käfig des zweiten Schenkels (20) oder mittels Einformen oder Anformen eines Gewindes oder einer Mutter in oder an den zweiten Schenkel (20).

16. Herstellungsverfahren gemäß einem der vorhergehenden Ansprüche 14 und 15 mit dem weiteren Schritt:
Bereitstellen (H3) eines Federarms (60) in dem ersten (10) oder zweiten Schenkel (20), mit dem der erste (10) und zweite Schenkel (20) relativ zueinander federvorspannbar sind.

17. Herstellungsverfahren gemäß einem der vorhergehenden Ansprüche 14 bis 16 mit dem weiteren Schritt:
Bereitstellen (H6) eines Verstellelements (74) in einem Gewindeelement (72) des ersten Schenkels (10), wobei ein Innengewinde des Gewindeelements (72) des ersten Schenkels (10) eine entgegengesetzte Gangrichtung im Vergleich zum Befestigungsgewinde des zweiten Schenkels (20) aufweist.

## Claims

1. Connector (1; 1') for at least a first (B1) and a second component (B2) having a distance therebetween, wherein the connector (1; 1') is an at least two-part edge connector, which is pluggable onto the edge of the first component (B1) for establishing a connection and having the following features:
a first leg (10) with a first opening (12) as a first part and a second leg (20) with a second opening (22) as a second part, **characterized in that** the two legs (10, 20) are movably connected to each other by means of a one-sided form-fit connection (40, 50) so that
a distance between the first (10) and the second leg (20) is adjustable freely or stepwise in a predefined interval and **in that**
a component (B1) having a component opening (A1) is receivable between the first (10) and the second leg (20) and the connector (1; 1') is fastenable in the component opening (A1) by means of a fastening element (90), wherein
the first (10) and the second leg (20) are connectable to each other by means of a pivoting axis (40) and arranged pivotably around the pivoting axis (40), wherein the pivoting axis (40) is arranged displaceable perpendicular to their course of direction.

2. Connector (1; 1') according to claim 1, in which the pivoting axis (40) is arranged in two oppositely positioned elongated holes (50), having a longitudinal extension outside of a plane of the first and the second leg (20).

3. Connector (1; 1') according to one of the preceding claims, in which the second leg (20) has a fastening thread adjacent to the second opening (22), wherein this fastening thread is preferably formed by a nut (30) held in a cage or by a thread molded or formed in the second leg (20).

4. Connector (1; 1'; 1") according to claim 3, in which the fastening thread is formed by a nut (30; 30") held in a cage, which is preferably movable laterally within the cage.

5. Connector (1") according to claim 4, in which the nut (30") has a longitudinal extension so that it extends through the component opening (A1') of the first component (B1) in the fastened condition of the second leg (10") for being supportable at the first leg (10).

6. Connector (1") according to claim 5, in which the second leg (20") is braceable against the first component (B1) in a press-fit by means of the nut (30").

7. Connector (1") according to claim 5 or 6, in which the first leg (10') comprises a reinforcement (15), preferably a metal disc, which protrudes at least partly into the component opening (A1') so that the reinforcement (15) is engageable by the nut (30").

8. Connector (1; 1') according to one of the preceding claims, in which the first leg (10) comprises a tolerance compensating element (70) for compensating tolerances between the first (B1) and the second component (B2).

9. Connector (1; 1'; 1") according to claim 3, in which the first leg (10) comprises a threaded element (72) in the inner thread of which an adjusting element (74) is guided, wherein a first thread turn direction of the inner thread is opposed to a second thread turn direction of the fastening thread of the second leg (20).

10. Connector (1; 1'; 1") according to claim 9, in which the adjusting element (74) comprises an inner dragging element (76) by means of which a frictional connection with a fastening screw (90) is producible.

11. Connector (1; 1'; 1") according to one of the preceding claims, in which the first (10) and second leg (20) are pre-tensionable with respect to each other by means of at least one spring arm (60).

12. Connecting method for a first (B1) and a second component (B2) having a distance therebetween by means of the connector (1; 1'; 1") according to one of the preceding claims, comprising the following steps:
inserting (I) of the first component (B1) between the first (10) and the second leg (20) of the connector and at this displacing the first and second leg guided with respect to each other by means of the form-fit connection (40, 50) and
fastening (III) a second component (B2) with a fastening screw (90) at the first component (B1) with connector (1; 1') by screwing the fastening screw (90) into a fastening thread of the second opening (22) of the second leg (20).

13. Connecting method according to claim 12, comprising the further step:
displacing (II) an adjusting element (74) into abutment with the second component (B2) by screwing the fastening screw (90) into the adjusting element (74) so that tolerances between the first (B1) and second component (B2) are compensated.

14. Production method for a connector (1; 1'; 1") according to one of the claims 1 to 11, wherein the connector (1; 1'; 1") is an at least two-part edge connector, **characterized by** the following steps:
a. providing (H1), preferably injection molding, a first leg (10) of plastic, comprising a first opening (12) and a pivoting axis (40),
b. providing (H2), preferably injection molding, a second leg (20) of plastic, comprising a second opening (22) and at least one elongated hole seat (50) of the pivoting axis (40) and
c. inserting (H4) the pivoting axis (40) into the elongated hole seat (50) so that the first (10) and second leg (20) are arranged pivotably and displaceably with respect to each other.

15. Production method according to claim 14, comprising the further step:
providing (H5) a fastening thread at the second leg (20) in which a fastening screw (90) is receivable, preferably by means of arranging a nut in a cage of the second leg (20) or by means of molding or forming a thread or a nut in or at the second leg (20).

16. Production method according to one of the preceding claims 14 and 15, comprising the further step:
providing (H3) a spring arm (60) in the first (10) or second leg (20) by means of which the first (10) and the second leg (20) are spring-pre-tensionable with respect to each other.

17. Production method according to one of the preceding claims 14 to 16, comprising the further step:
providing (H6) an adjusting element (74) in a threaded element (72) of the first leg (10),
wherein an inner thread of the threaded element (72) of the first leg (10) has a thread turn direction opposite to the fastening thread of the second leg (20).

## Revendications

1. Dispositif d'assemblage (1; 1') pour au moins un premier (B1) et un deuxième composant (B2) avec un espace intermédiaire, le dispositif d'assemblage (1 ; 1') étant un dispositif d'assemblage de bord constitué d'au moins deux parties, lequel peut être emboîté sur le bord du premier composant (B1) et présente les caractéristiques suivantes :
- une première branche (10) avec une première ouverture (12) comme première partie et une deuxième branche (20) avec une deuxième ouverture (22) comme deuxième partie,
**caractérisé en ce que** les deux branches (10, 20) sont reliées entre elles de façon mobile par le biais d'un assemblage unilatéral à complémentarité de forme (40,50), de telle façon que
- un espace entre la première (10) et la deuxième branche (20) peut être réglé librement ou par paliers selon un intervalle prédéfini et que
- un composant (B1) avec une ouverture de composant (A1) peut être reçu entre la première (10) et la deuxième branche (20) et le dispositif d'assemblage (1 ; 1') peut être fixé dans l'ouverture de composant (A1) par le biais d'un élément de fixation (90), dans lequel
- la première (10) et la deuxième branche (20) sont reliées entre elles par le biais d'un axe de pivotement (40) et sont disposées de manière à pouvoir pivoter autour de l'axe de pivotement (40), l'axe de pivotement (40) pouvant être déplacé perpendiculairement à sa direction d'extension.

2. Dispositif d'assemblage (1 ; 1') selon la revendication 1, dont l'axe de pivotement (40) est disposé dans deux trous oblongs (50) opposés, lesquels présentent une extension longitudinale à l'extérieur d'une surface de la première et de la deuxième branche (20).

3. Dispositif d'assemblage (1; 1') selon l'une des revendications précédentes, dont la deuxième branche (20) présente un filetage de fixation adjacent à la deuxième ouverture (22), lequel est formé de préférence par un écrou (30) maintenu dans une cage ou par un filetage façonné dans la deuxième branche (20).

4. Dispositif d'assemblage (1; 1' ; 1") selon la revendication 3, dans lequel le filetage de fixation est formé par un écrou (30 ; 30") maintenu dans une cage, lequel est de préférence déplaçable latéralement à l'intérieur de la cage.

5. Dispositif d'assemblage (1") selon la revendication 4, dans lequel l'écrou (30") présente une extension longitudinale, de sorte que celui-ci traverse l'ouverture de composant (A1') du premier composant (B1) dans un état fixé de la deuxième branche (10"), afin de pouvoir s'appuyer sur la première branche (10).

6. Dispositif d'assemblage (1") selon la revendication 5, dans lequel la deuxième branche (20") peut être serrée contre le premier composant (B1) dans un ajustement pressé par le biais de l'écrou (30").

7. Dispositif d'assemblage (1") selon la revendication 5 ou 6, dans lequel la première branche (10') présente un renforcement (15), de préférence un disque métallique, lequel fait saillie au moins partiellement dans l'ouverture de composant (A1'), de telle façon que l'écrou (30") peut agir sur le renforcement (15).

8. Dispositif d'assemblage (1; 1') selon l'une des revendications précédentes, dont la première branche (10) présente un élément de compensation de tolérances (70) destiné à compenser des tolérances entre le premier (B1) et le deuxième composant (B2).

9. Dispositif d'assemblage (1 ; 1' ; 1") selon la revendication 3, dont la première branche (10) comporte un élément fileté (72) dans le filetage intérieur duquel est guidé un élément de réglage (74), dans lequel une première direction de pas du filetage intérieur est opposée à une deuxième direction de pas du filetage de fixation de la deuxième branche (20).

10. Dispositif d'assemblage (1 ; 1' ; 1") selon la revendication 9, dont l'élément de réglage (74) comporte un moyen d'entraînement intérieur (76), permettant de réaliser un assemblage à friction avec une vis de fixation (90).

11. Dispositif d'assemblage (1 ; 1' ; 1") selon l'une des revendications précédentes, dans lequel la première (10) et la deuxième branche (20) peuvent être précontraintes l'une par rapport à l'autre par le biais d'au moins un bras à ressort (60).

12. Procédé d'assemblage pour un premier (B1) et un deuxième composant (B2) avec un espace intermédiaire à l'aide d'un dispositif d'assemblage (1 ; 1' ; 1") selon l'une des revendications précédentes, lequel présente les étapes suivantes :
- insertion (I) du premier composant (B1) entre la première (10) et la deuxième branche (20) du dispositif d'assemblage et déplacement simultané de la première et de la deuxième branche l'une par rapport à l'autre, guidé par l'assemblage par complémentarité de forme (40, 50) et
- fixation (III) d'un deuxième composant (B2) avec une vis de fixation (90) sur le premier composant (B1) avec le dispositif d'assemblage (1 ; 1'), par vissage de la vis de fixation (90) dans un filetage de fixation de la deuxième ouverture (22) de la deuxième branche (20).

13. Procédé d'assemblage selon la revendication 12, comprenant l'étape supplémentaire suivante :
- déplacement (II) d'un élément de réglage (74) en contact avec le deuxième composant (B2) par vissage de la vis de fixation (90) dans l'élément de réglage (74), de manière à pouvoir compenser des tolérances entre le premier (B1) et le deuxième composant (B2).

14. Procédé de fabrication pour un dispositif d'assemblage (1 ; 1' ; 1") selon l'une des revendications 1 à 11, dans lequel le dispositif d'assemblage (1 ; 1' ; 1") est un dispositif d'assemblage de bord constitué d'au moins deux parties, **caractérisé par** les étapes suivantes,
a. mise à disposition (H1), de préférence coulage par injection, d'une première branche (10) en plastique, laquelle comporte une première ouverture (12) et un axe de pivotement (40),
b. mise à disposition (H2), de préférence coulage par injection, d'une deuxième branche (20) en plastique, laquelle présente une deuxième ouverture (22) et au moins un logement à trou oblong (50) de l'axe de pivotement (40), et
c. insertion (H4) de l'axe de pivotement (40) dans le logement à trou oblong (50), de sorte que la première (10) et la deuxième branche (20) sont disposées de façon pivotante et en décalage l'une par rapport à l'autre.

15. Procédé de fabrication selon la revendication 14, comprenant l'étape supplémentaire suivante :
- réalisation (H5) d'un filetage de fixation sur la deuxième branche (20), dans lequel une vis de fixation (90) peut être reçue, de préférence par agencement d'un écrou dans une cage de la deuxième branche (20) ou par façonnage ou moulage d'un filetage ou d'un écrou dans ou sur la deuxième branche (20).

16. Procédé de fabrication selon l'une des revendications 14 et 15, comprenant l'étape supplémentaire suivante :
- mise à disposition (H3) d'un bras à ressort (60) dans la première (10) ou la deuxième branche (20), au moyen duquel la première (10) et la deuxième branche (20) peuvent être précontraintes élastiquement l'une par rapport à l'autre.

17. Procédé de fabrication selon l'une des revendications 14 à 16, comprenant l'étape supplémentaire suivante :
- mise à disposition (H6) d'un élément de réglage (74) dans un élément fileté (72) de la première branche (10), dans lequel un filetage intérieur de l'élément fileté (72) de la première branche (10) présente une direction de pas opposée en comparaison avec le filetage de fixation de la deuxième branche (20).
